**Europäisches Patentamt**

**European Patent Office**

**Office européen des brevets**

(19)

(11) **EP 1 313 043 A1**

(12) **EUROPEAN PATENT APPLICATION**
published in accordance with Art. 158(3) EPC

(43) Date of publication:
21.05.2003 Bulletin 2003/21

(51) Int Cl.$^7$: **G06F 17/60**

(21) Application number: 01938676.2

(22) Date of filing: 14.06.2001

(86) International application number:
**PCT/JP01/05085**

(87) International publication number:
**WO 01/097119 (20.12.2001 Gazette 2001/51)**

(84) Designated Contracting States:
**AT BE CH CY DE DK ES FI FR GB GR IE IT LI LU
MC NL PT SE TR**

(30) Priority: 15.06.2000 JP 2000180338
22.05.2001 JP 2001152077

(71) Applicant: **MATSUSHITA ELECTRIC INDUSTRIAL
CO., LTD.**
**Kadoma-shi, Osaka 571-8501 (JP)**

(72) Inventors:
• **KANAZAWA, Kiyoshi**
**Katano-shi, Osaka 576-0051 (JP)**
• **SHIRAISHI, Takako**
**Ikoma-shi, Nara 630-0121 (JP)**

• **NOMURA, Hiroyoshi**
**Soraku-gun, Kyoto 619-0224 (JP)**
• **KASHIMOTO, Takashi**
**Nara-shi, Nara 630-8001 (JP)**
• **KOBAYASHI, Tetsu**
**Nara-shi, Nara 630-8423 (JP)**
• **YOSHIMURA, Yasuo**
**Yamatokoriyama-shi, Nara 639-1042 (JP)**
• **YAMAMOTO, Masayo**
**Yamatokoriyama-shi, Nara 639-1025 (JP)**
• **KAGEYAMA, Yukitoshi**
**Moriguchi-shi, Osaka 570-0035 (JP)**

(74) Representative: **Balsters, Robert et al**
**Novagraaf International S.A.**
**25, avenue du Pailly**
**1220 Les Avanchets - Geneva (CH)**

(54) **INSURANCE DESCRIPTIONS ADJUSTING SYSTEM**

(57)      An insurance descriptions adjusting system for properly setting an insurance premium. The system comprises an insurance descriptions adjusting method and device, a status data acquiring terminal device, an advice responding terminal device, and advice device, an insurance descriptions adjusting program, a status data acquiring program, an advice responding program, an advice program, and a computer-readable recording medium for recording those programs. Insurance descriptions determined based on a status data describing a state of an insured object are adjusted by using a level of enthusiasm shown by an insurance contractor towards the reacquisition of the status data and a level of enthusiasm shown by the insurance contractor in reducing the risk of an insured object. Accordingly, a proper insurance premium is set for an insured object whose future risks are likely to go lower.

FIG. 1

EP 1 313 043 A1

**Description**

**TECHNICAL FIELED**

In the field of insurance business such as life insurance, automobile insurance, etc., the present invention relates to an insurance descriptions adjusting system for adjusting insurance descriptions determined based on status data, which status data describing values regarding a state of an insured person or other object of insurance. More specifically, an insurance descriptions adjusting method, an insurance descriptions adjusting device, a status data acquiring terminal device, an advice responding terminal device, and advice device; an insurance descriptions adjusting program, a status data acquiring program, an advice responding program, an advice program; and a computer-readable recording medium for recording those programs are presented.

**BACKGROUND ART**

The insurance may be divided into two major categories; the life insurance which pays insurance money on the life and death of a human being, another category is the insurance against loss which pays insurance money against damage incurred by an unexpected accident.

Among the life insurance, there are many varieties.

For example, a term insurance which insures against death pays beneficiary a death benefit corresponding to predetermined insurance money in a case when an insured person passes away during the term of premium payment. If there is no such happening within the term of premium payment, no death benefit is paid, even when the insured person dies afterwards; hardly any redemption is made at the maturity. With respect to the above-described type of insurance with no refund payment, an insurance company does not need to reserve a fund for maturity payment. So, the amount of premium payable by an insurance contractor can be lower as compared with that in a whole life insurance, an endowment insurance or the like savings type, or installment savings type, insurance.

The premium payment schedule may be; a monthly payment, a semiannual payment, an annual payment, an advanced payment, a lump sum payment or other ways. In the monthly payment schedule, a certain fixed amount of premium has to be paid every month, whereas in the lump sum payment schedule, an entire amount of premium covering the whole insurance term has to be paid at one time. As a general rule, the greater the amount to be paid for one time the higher the premium discount rate.

Among the term insurance having a fixed insurance term, many are renewable for the same term. In order to have a 30-year term insured, for example, there may be an option, either signing a 30-year insurance contract or renewing a 10-year insurance contract for two times. The former type of contract covering a relatively long term is called a full-term insurance, while the latter whose term is relatively short and expecting the future renewals is called a renewal type insurance.

In the renewal type insurance, premium payable by an insurance contractor every month is a fixed amount during a certain premium payment term. New amount of premium payable after a renewal, however, is determined based on the age of insured person. Basically, amount of premium goes up along with the increasing age of insured person; therefore, the premium amount after a renewal is higher than before. Therefore, in a renewal type insurance, sum of premiums payable through the entire term is higher than that of a fall-term insurance, although the initial premium amount is low with the renewal type insurance.

Basic insurance premium of life insurance is determined based generally on the expected mortality rate, the assumed interest rate and the expected rate of business expenses. The expected mortality rate is calculated based on statistics of an age group and gender group to which an insured person belongs. The assumed interest rate is a rate used when operating the insurance premium paid by insurance contractors. A portion of the premium determined based on the expected mortality rate and the assumed interest rate is called net insurance premium, which portion is used for the payment of death benefit and redemption at maturity. Another portion of the premium determined based on the expected rate of business expenses is called loading of premium. A sum of the net insurance premium and the loading of premium forms the basic insurance premium payable by an insurance contractor.

The category of insurance against loss includes a fire insurance, an accident insurance, an automobile insurance, etc. Automobile insurance is among the most popular. The automobile insurance in the wide definition includes a mandatory automobile liability insurance (an obligatory insurance) and a voluntary insurance. The mandatory insurance is a statutory-obligatory insurance aimed to save the victims of personal injury, which insurance is formed of an automobile bodily injury liability insurance alone. The voluntary insurance is designed to complement the mandatory insurance. It is a combination of some of an injury liability insurance, a self-sustained personal accident insurance, an accident insurance against uninsured vehicle, a property damage insurance, a passenger's accident insurance and an automobile physical damage insurance.

The automobile insurance is a type of insurance with no refund payment. Term of the mandatory automobile liability insurance coincides with the term of mandatory automobile inspection, while term of the voluntary insurance is one year. Premium of the mandatory automobile liability insurance is determined for an individual vehicle, in accordance with objective of the usage (for private use or business use), vehicle type (standard sedan, compact car, etc.), region of cruising and other elements. Premium of the voluntary insurance is determined for an individual insurance contractor based on the object of car use, vehicle type, personal accident history, age and gender of driver, region of cruising and other elements. The voluntary insurance adopts a non-fleet class-wise tariff rates system, where an insurance contractor is provided with an advanced class for a year subsequent to a non-accident year, and the amount of premium payable for the subsequent year is lowered. If an accident is caused in a certain year, the class is degraded and the premium payable in the next year is increased.

Recently, a risk-subdivided type insurance is attracting people's attention for its economy in the premium. This type of insurance started in the automobile insurance is spreading also in the life insurance. This type of life insurance is being recognized as an attractive insurance merchandise.

The risk-subdivided type insurance has been designed, as the name indicates, based on risk elements subdivided into smaller segments. Thereby, it is aimed to lower the premium by bringing a deviation of actual risk from the presumed risks, which is the base of premium calculation, as small as possible.

For example, in a life insurance where the risks are not subdivided into smaller segments, all of the people belonging to a relatively large group categorized by age and gender might be levied the same amount of premium, regardless of whether he or she is healthier than other people in the same large segment, or otherwise.

Under the above situation, an insurance contractor who pays premium for an insured person of good health is paying too high an amount relative to other contractor who pays for an insured person of poor health. A contractor who pays premium for an insured person of poor health is paying too small an amount relative to other contractor who pays for an insured person of good health.

In a case of automobile insurance where the risks are not subdivided into smaller segments, all of the person who own cars belonging to a relatively large group categorized by usage, vehicle type, vehicle class, etc. might be levied the same amount of premium, even if a vehicle owned by him or her has a safety device superior to that of other cars of the same group, or contrary.

That is, among the people belonging to the same group, there exist some contractors who pay relatively higher amount of premium, while there are those who pay relatively lower premium.

Whereas, in the risk-subdivided type life insurance, basic premium determined based on mortality rate, etc. is discounted in accordance with certain indices related with an insured person's health condition at the time of contract. For example, if one is confirmed to have non-smoking habit by a sputum test at the time of contract, a discount is applied up to approximately 30%.

A recently introduced risk-subdivided type life insurance uses values of blood sugar and BMI for the index. The BMI stands for Body Mass Index, which is defined by a formula (body weight [kg]) / (height [m]) 2.

In a risk-subdivided type automobile insurance, basic premium determined by usage, type, etc. of a vehicle is discounted in accordance with such indices related with rate of accidents, average amount of damage per accident, etc. For example, if a vehicle is equipped with an airbag, an anti-lock brake system (ABS), the basic premium is discounted.

As described in the above, when the risk category is divided into smaller segments, the number of contractors paying relatively too high premium, or too low premium decrease. Thereby a sense of unfairness among the insurance contractors will be eased. If risk of an object of insurance is low, premium payable by the contractor can be set at low level. From the view point of an insurance company, this makes it easy to secure an insurance object of low risk. Therefore, the subdividing of risk group into smaller segments is expected to become increasingly popular.

A point of importance for an insurance company in promoting the risk-subdividing is raising a level of consciousness at insurance contractors as well as insured persons about the risk management. If a contractor has a high level of enthusiasm towards risk management, the risk of an insured object is likely to decrease in the future to be lower than that of other object of insurance, even though risk level of the insured object at the present is the same as others.

In a life insurance, a level of enthusiasm towards the health management is shown by an insured person in his or her day to day behavior; measurement of blood pressure, body weight, etc. on regular basis, visiting medical doctor for regular checking and the like activities. The level of health-conscious mind at insured persons can only be measured through their collaborating enthusiasm shown in the daily activities.

Values such as the blood pressure, BMI, etc. used for indices in the risk-subdivided type insurance may well shift from time to time, after a diagnosis made upon request of an insurance company, or between one diagnosis and other diagnosis. If an insurance company wishes to acquire such data at a frequency high enough to offset the fluctuation, a positive collaborating actions at the insured person are indispensable.

In an automobile insurance, a level of enthusiasm towards management of car safety (status of a vehicle) is shown by an insured person in his or her day to day behavior; having the 6-month regular inspection, the 12-month regular inspection and other regular inspections without fail. Thus the level of enthusiasm shown by an insurance contractor towards status of a vehicle can only be measured through the contractor's behavior.

In the conventional types of insurance, not only the automobile insurance and life insurance, data acquired through diagnosis of an insured person were used in determining the premium, insurance money and other descriptions of an insurance. However, the positive enthusiasm shown thereafter by an insured person or an insurance contractor has never been taken into account. Therefore, it was difficult to set a proper insurance descriptions on an object of insurance whose risk is likely to decrease in the future.

The Japanese Laid-open Patent No. H11-511581 discloses a technology in which a sensor mounted in a vehicle automatically collects data about driving behavior, and the collected data are used for adjusting the premium.

The above technology carries out a day to day diagnosis. The driving behavior and the like data collected automatically by the sensor, however, do not provide sufficient information needed for evaluating a level of enthusiasm shown by a contractor towards vehicle management. Information as to whether a vehicle had a regular inspection or not, for example, is an essential data needed for evaluating the enthusiasm. A sensor is capable of providing the data as it is, but it is difficult to forecast how the data will change in the future. For example, even if it is driven by a same driver, it is possible that the data will make a substantial change if driven in a different cruising area.

If an insurance company wishes to secure an object of insurance whose risk is likely to decrease in the future, taking an enthusiasm shown by an insurance contractor towards risk management into consideration is not a sufficient means. It is also an effective measure for an insurance company to make an appropriate advice, within an allowable extent, to the contractor.

Even if an effective advice is made by an insurance company, it is not easy to judge whether or not the advice is revealing its effects and the risk of an insured object is improving, if simply the condition of insured object is measured. Even when an insurance contractor is conscientiously making efforts to implement the advice, a judgement based solely on status quo of the insured object may come out that there is no improvement at all, if the advice given is of such nature which does not reveal its effects immediately.

It is essential to take a collaborating enthusiasm shown by an insurance contractor as well as an insured person into account when providing the descriptions of an insurance. This is because; when a conscientious effort for implementing an advice is acknowledged by an insurance company it means that risk of the insured object is likely to decrease in the future.

## DISCLOSURE OF THE INVENTION

The present invention addresses the above-described problems involved in conventional technology, and aims to adjust insurance descriptions, which were determined based on status data describing values showing state of an insured object, by using at least one of a level of first collaborating enthusiasm shown by an insurance contractor towards reacquisition of the status data and a level of second enthusiasm shown by an insurance contractor in reducing risk of an insured object. Also offered by the present invention includes an insurance descriptions adjusting method, an insurance descriptions adjusting device, a status data acquiring terminal device, an advice responding terminal device, an advice device, an insurance descriptions adjusting program, a status data acquiring program, an advice responding program, an advice program, and a computer-readable recording medium for recording those programs.

In order to implement the above objectives, the present invention offers a method for adjusting the descriptions of an insurance.

The method adjusts, using a computer, the insurance descriptions, which were determined based on status data describing state of an insured object, by taking at least one of a level of first collaborating enthusiasm shown by an insurance contractor towards reacquisition of the status data and a level of second enthusiasm shown by an insurance contractor in reducing risk of an insured object into consideration.

In the adjusting method, the insurance descriptions determined based on status data describing state of an insured person's health condition or state of a vehicle's maintenance condition, for example, are adjusted by using at least one of a level of first collaborating enthusiasm shown by an insurance contractor towards the reacquisition of the status data and a level of second enthusiasm shown by an insurance contractor in reducing risk of an insured object.

Reacquisition of the status data is important not only for an insurance contractor in managing conditions of an object of insurance well, but also for an insurance company in re-describing the insurance descriptions in accordance with status data. High collaborating enthusiasm shown by a contractor represents his or her positive consciousness on management of an insurance object. This will lead to a lower future risk of the insured object. On the other hand, if the enthusiasm shown by an insurance contractor is not high enough, it represents insufficient enthusiasm about management of the insured object. This would mean that the present risks exhibited in status data are going to increase in the future.

That is, the use of a level of first collaborating enthusiasm shown by an insurance contractor towards the reacquisition of status data in adjusting the insurance descriptions makes it possible to provide descriptions of an insurance that contain not only the risks at the present stage but also the prospective future risks.

In a case where the collaborating enthusiasm of an insurance contractor is sufficiently high, load of the contractor may be alleviated with the object of insurance the future risk of which is expected to go down. On the other hand, if the enthusiasm shown by an insurance contractor is not high enough, the load of contractor will be increased. This, however, will raise a level of the contractor's enthusiasm on the insured object; the insurance company will eventually benefit from the increased level of enthusiasm in securing an insurance object of lower risks.

There is a high possibility that the risks of an insured object will go down in the future if an insurance contractor is showing a collaborating enthusiasm in reducing the risks. Although a contractor is collaborating for reducing the risk, the resultant effects may not necessarily appear immediately in status data. However, the element of prospective changes in the future risk may be incorporated in descriptions of an insurance by taking into consideration a level of second enthusiastic collaboration, in addition to status data, when providing the descriptions.

In a case where a level of second collaborating enthusiasm shown by an insurance contractor is sufficiently high, load of the contractor may be alleviated for an insurance object whose future risk is likely to go down. On the other hand, if the enthusiasm is not high enough, the contractor's load will be increased. This, however, will drive the contractor to make efforts to lower the future risks of insured object; the insurance company will eventually benefit from it in securing an insurance object of lower risks.

If both of the first collaborating enthusiasm and the second collaborating enthusiasm are taken into account in adjusting descriptions of an insurance, which means that more materials are used for estimating the future state of an insured object, the adjustment can be made more easily and the result of adjustment will become more reliable. Therefore, the contractor's load may be alleviated a step further. And the insurance company be in a better position in securing an object of insurance whose future risk is likely to go down.

The values used to exhibit state of an object of insurance in the present invention do not refer only to those numerical values representing the condition of an insured object, but the values also refer to symbols, etc. used to categorize the condition of an object of insurance.

In a method for adjusting insurance descriptions in accordance with the present invention, the adjustment is worked out using an adjustment table or a calculation formula, etc. provided in advance.

If such an adjustment table or a calculation formula is used, the adjustment can be worked out precisely and easily by simply providing a level of first collaborating enthusiasm or a level of second collaborating enthusiasm.

In the present method of adjusting insurance descriptions, a level of first collaborating enthusiasm is evaluated on by making use of, for example, state of response made to a reacquisition notice advising to reacquire a status data.

A level of first collaborating enthusiasm can be evaluated in the form of an objective index by making use of state of response made to a notice urging reacquisition of status data. Information regarding enthusiasm towards reacquisition of status data shown by a contractor may be made available in various ways. However, using the state of response made in response to a reacquisition notice delivered from insurance company may be a preferred way for providing the evaluation on stable basis.

The reacquisition notice is delivered at such timing; for example, when a certain term void of status data reacquisition continues for a certain predetermined term, or at a certain date prior to the date when reacquisition of status data is due.

In a case where status data has an easily changeable nature, the descriptions of an insurance determined based on status data may deviate from the actual risks if a status data is acquired only after a long period of absence. Thus the reacquisition of status data on regular basis is important for an insurance contractor in managing the condition of an insurance object, also for an insurance company in re-setting the insurance descriptions as well.

A reacquisition notice delivered after a certain term void of status data reacquisition continues for a certain specific term will be effective to improve consciousness of a contractor towards regular reacquisition of status data. This at the same time provides an insurance company with more possibility for regularly acquiring status data; thereby facilitating a preparation of the descriptions on more appropriate grounds.

A reacquisition notice delivered at a certain date prior to the date when the status data reacquisition is due will be effective to prevent the occurrence of such an environment in which necessary data are not available when working out the adjustment, and the insurance descriptions are inadvertently adjusted for an increased load of contractor.

There are some cases where a level of first collaborating enthusiasm is evaluated by adding, for example, contents of a reacquisition notice. The contents of a notice are related to how high is the contractors' consciousness about the status data reacquisition, and to cost payable by the insurance company for delivering the notice. If a contractor's enthusiasm to the status data reacquisition is low, status data may not be acquired unless notice is delivered repeatedly. Number of the notice deliveries will have to be increased, more elaborated means of delivery will have to be used to insure reacquisition of the status data. All of such works lead to an increased cost at insurance company. The smaller number of notices contributes to alleviate the cost accordingly. Thus, evaluating a level of first collaborating enthusiasm by taking into account the contents how the reacquisition notice was delivered may be effective in improving the contractors' consciousness about the status data reacquisition. This eventually alleviates the load of contractor; and for the insurance company, it will become easy to secure an object of insurance whose risk is likely to decrease in the future.

The state of response made to reacquisition notice contains at least one of the following elements; responded or no response, contents of the response, and timing of the response. Level of a contractor's collaborating enthusiasm for the status data reacquisition is objectively represented by the elements, responded or no response, contents of the response, and response timing to the notice. Therefore, these elements are the means suitable for evaluating a level of first collaborating enthusiasm. Those contractors making quick and sure response may be regarded as those who are managing object of insurance well. To such contractors, the insurance descriptions may be adjusted for alleviating the load.

In some cases, a level of first collaborating enthusiasm is evaluated on by taking into account at least one of the number of status data acquisitions and the timing when status data was acquired.

Irrespective of whether a reacquisition notice is delivered by an insurance company, such elements that many status data have been acquired, that the status data have been acquired during the time when the nature of an insured object is in stable state, and that the status data are acquired on a relatively recent date, may be an indication that the insured object is positively managed by the contractor. A level of first collaborating enthusiasm can be evaluated in the form of an objective index, by using information regarding the number of status data acquired and the time when acquired, regardless of whether a reacquisition notice was actually delivered or not. In a case where a contractor's enthusiasm towards the status data reacquisition is high and many status data have been acquired among other cases, such collaborating enthusiasm may be reflected in the insurance descriptions for an alleviated load of the insurance contractor.

In the present method of adjusting insurance descriptions, there is a case in which the adjustment is worked out by taking the reliability of status data into consideration. Even if status data are made available in a same form, it does not mean that these data have the same degree of reliability. Use of a low reliability status data may lead to an inappropriate adjustment of insurance descriptions. The influence can be curtailed by taking the reliability into consideration in adjusting insurance descriptions; the range of adjustment may be narrowed when using a status data whose reliability is low.

Reliability of a status data can be judged based on, for example, a state how it is made available. Name of person who measured the data, instruments used for the measurement, method of the measurement, etc. are the elements which indicate the state how status data are made available. Reliability level of a status data may be evaluated in the form of an objective index by making use of the information how status data were acquired.

In some cases in the present adjusting method, the adjustment is worked out by comparing a status data with a predetermined standard value. Health condition of an insured person, or maintenance condition of a vehicle, as exhibited in a status data may be judged if it is good or bad by comparing the data with medical or mechanical knowledge, experience or the statistics. If a status data is judged that it represents a good health condition, or a good vehicle maintenance, it means that the risk at insurance company is small, and the load of contractor may be alleviated.

In some cases in the present adjusting method, the adjustment is worked out in accordance with a time sequential change in the status data. The health condition, or the maintenance condition, is not the kind of information whose contents are fixed unchanged, to be definitely good, or bad, at all times. They may change with the lapse of time. Even if an insured person or a vehicle is judged to be in bad condition by an absolute criterion at a certain specific moment, load at an insurance contractor can be alleviated if the condition is acknowledged to have been improving. The insurance descriptions in which the improving condition is taken into account will encourage a contractor towards a higher level of the enthusiasm; as a result, the risk at insurance company will go down.

In the present adjusting method, a level of second collaborating enthusiasm is evaluated based on, for example, information how response is made to a notice advising reduction of risks of an insured object. Giving advice on the health promotion, or on the good maintenance of vehicle, is an important activity of an insurance company who wishes to reduce the future risks. An advice given to may not always generate an immediate effect. However, a quick response to an advice may be an indication of contractor's high enthusiasm towards reduction of risks of an insured object. A level of second collaborating enthusiasm may be evaluated in the form of an objective index, by making use of the information regarding response to an advice. Thus, even in such a case where an advice does not generate an immediate effect, insurance descriptions may be properly adjusted with an object of insurance whose risks are likely to go down in the future.

In a case where an advice is given to a contractor, a level of second collaborating enthusiasm is evaluated on by taking, for example, contents of the advice into consideration. Among varieties of such advice intended for reducing the risks of an insurance object, some may bear a relatively great effect while some others may not bear an effect as such. Therefore, if the adjustment of insurance descriptions is simply worked out in accordance with status data, a sense of unfairness might arise among the contractors depending on contents of the advice given to. Inclusion of the contents of advice in the adjustment work will curtail generation of such a sense of unfairness, making it possible to implement a fairer adjustment on the insurance descriptions.

In a case where a state of response made to advice is used, it contains at least one of the following elements; responded or no response, contents of the response, and timing of the response. Level of a contractor's collaborating enthusiasm is objectively represented by such elements as, responded or no response, contents of the response, and response timing to the advice. Therefore, these elements are the means suitable for evaluating a level of second collaborating enthusiasm. Those contractors making quick and sure response to advice may be regarded as those who are enthusiastic in reducing the risks of insurance object. To such contractors, the insurance descriptions may be adjusted for alleviating the load.

In a case where a state of response made to advice is used, the adjustment of insurance descriptions is sometimes worked out by taking the reliability of response into consideration. Even if an advice is followed by insurance contractors, actual mode of the implementation may differ by each of the respective contractors. Those response of low reliability might not generate sufficient effects. So, by taking into account the reliability of the response the insurance descriptions may be adjusted in a more appropriate manner.

Reliability of a response made to an advice is judged based on, for example, a state how a contractor's compliance to advice was acknowledged. The state of acknowledgement is represented by name of a person who acknowledged contractor's compliance to the advice, contents of menu which have been acknowledged to be in compliance with the advice, name of an apparatus approved for implementing the contents of advice, etc. Reliability level of a response made to advice may be evaluated in the form of an objective index, by making use of information acknowledging how an advice is being implemented.

The present invention also offers an insurance descriptions adjusting device.

An insurance descriptions adjusting device in the present invention adjusts the insurance descriptions determined based on status data describing values which represent the state of an insured object. The device comprises collaborating enthusiasm evaluating means for evaluating at least one of a level of first collaborating enthusiasm shown by an insurance contractor towards the reacquisition of status data and a level of second collaborating enthusiasm shown by an insurance contractor in reducing the risk of an insured object; and insurance descriptions adjusting means for adjusting insurance descriptions using results of evaluation generated from the collaborating enthusiasm evaluating means.

When the present insurance descriptions adjusting device adjusts insurance descriptions, which are determined based on status data describing the values representing the state of an insured object, the collaborating enthusiasm evaluating means evaluates at least one of a level of first collaborating enthusiasm shown by an insurance contractor towards the reacquisition of status data and a level of second collaborating enthusiasm shown by an insurance contractor in reducing the risk of an insured object.

Reacquisition of status data is important for an insurance contractor in managing the state of an insured object well, also for an insurance company in resetting the descriptions of an insurance. Enthusiasm of an insurance contractor for managing the state of an insured object is shown in a collaborating work of the contractor. The collaborating enthusiasm evaluating means determines a level of first collaborating enthusiasm in the form of an index.

If an insurance contractor is collaborating enthusiastically in reducing the risk of an insured object, future risks of the insured object are likely to go down. The collaborating enthusiasm evaluating means determines a level of second collaborating enthusiasm in the form of an index.

The insurance descriptions are adjusted using the result of evaluation by the collaborating enthusiasm evaluating means.

Regardless of whether it is first collaborating enthusiasm or second collaborating enthusiasm, a high mark evaluation result leads insurance descriptions towards lower load of an insurance contractor. Load of an insurance contractor may be alleviated with an insurance object whose future risks are likely to go down. On the other hand, a low mark evaluation result given with respect to the first collaborating enthusiasm or the second collaborating enthusiasm leads to an increased load of an insurance contractor. This will encourage the insurance contractor to manage the state of insured object well and to reduce the risks in the future. As a result, an insurance company will be able to secure an object of insurance easily whose risks are likely to go down in the future.

When both of a level of first collaborating enthusiasm and a level of second collaborating enthusiasm are taken into account in adjusting insurance descriptions, it means that material for judging the future status of an insured object has increased. This makes the adjustment more reliable and surer. Thus the load of a contractor may be reduced a step further. This also benefits the insurance company, because an object of insurance whose future risks are likely to go down can be readily made available to the company more easily.

In the present insurance descriptions adjusting device, if the collaborating enthusiasm evaluating means use an information regarding the state of responding to a notice for status data reacquisition, a level of first collaborating enthusiasm can be evaluated in the form of an objective index.

Furthermore, if it further comprises reacquisition term judging means for judging whether or not a certain term void of status data reacquisition continues for a certain specific term and a reacquisition notice is implemented as soon as the certain specific term continues, the contractor's consciousness about the importance of reacquiring variable status data on continual basis will be improved. At the same time, the insurance company will have an increased possibility of acquiring the status data on continual basis; which will enable to determine more proper insurance descriptions.

If it further comprises reacquisition timing judging means for judging a certain specific timing that comes prior to the date on which the status data reacquisition is due and a reacquisition notice is implemented as soon as the reacquisition timing judging means judged that it is the certain specific timing, occurrence of such a circumstance under which the insurance descriptions are compelled to be adjusted for increasing a contractor's load because necessary status data are in short supply, can be prevented.

In the present insurance descriptions adjusting device, information regarding the state of response contains, for example, at least one of the following elements, responded or no response, contents of the response, and timing of the response. The mode of response made to a reacquisition notice, responded or no response, contents of the response, and timing of the response, etc. reflects objectively the contractor's collaborating enthusiasm. Therefore, it is suitable for use in evaluating a level of first collaborating enthusiasm. The quick and sure response may be the sign that the insurance contractor is conscientiously managing an insured object, and the insurance descriptions may be adjusted for alleviating the load of contractor.

In the present insurance descriptions adjusting device, the collaborating enthusiasm evaluating means some times evaluates a level of first collaborating enthusiasm by using at least one of, for example, information on the number of status data acquisitions and the timing when status data was acquired.

Irrespective of whether a reacquisition notice was implemented by an insurance company or not, such information as that there are many status data acquired, that the status data is acquired at a stage when an insured object is in a stable state, and that the status data is acquired at a relatively recent date may be a sure sign that the insurance contractor is positively managing an insured object. Therefore, a level of first collaborating enthusiasm can be evaluated in the form of an objective index, also by making use of the number of status data acquired and timing when the status data was acquired. Specifically, in a case where a contractor's enthusiasm towards the status data reacquisition is high and many status data have been reacquired, the collaborating enthusiasm may be reflected in the insurance descriptions and the load of contractor alleviated.

If it further comprises status data reliability judging means for judging the reliability of status data, and the insurance descriptions adjusting means adjusts the insurance descriptions taking into account the reliability of status data judged by the status data reliability judging means, a possible ill-affect likely to be caused by a low reliability status data can be suppressed by limiting margin of the adjustment on insurance descriptions.

In the present insurance descriptions adjusting device, if the insurance descriptions adjusting means adjusts the insurance descriptions in accordance with results of comparison between the status data and a predetermined standard value, whether or not a status data represents a good health condition of an insured person, or a good maintenance condition of a vehicle, can be confirmed. If it is a sign of good condition, it means that the risk of insurance company is low, and the load of contractor can be alleviated.

In the present insurance descriptions adjusting device, if the insurance descriptions adjusting means adjusts the insurance descriptions in accordance with time sequential change of status data, it can be confirmed whether the state of an insured object is improving or not. Insured person will be encouraged to improve the health condition, or vehicle maintenance condition, by positively reflecting the above confirmation in the insurance descriptions. As a result, risks of insurance company would decrease, and the load of insurance contractor could be alleviated.

In the present insurance descriptions adjusting device, if the collaborating enthusiasm evaluating means makes use of an information regarding the state of response given to an advice for lowering risks of an insured object, a level of second collaborating enthusiasm may be evaluated in the form of an objective index. Then, even in a case where the advice does not generate immediate effect, the insurance descriptions can be properly adjusted with an insured object whose future risk is likely to go lower.

The information regarding state of response contains, for example, at least one of the following elements, responded or no response, contents of the response, and timing of the response. The mode of response made to an advice, responded or no response, contents of the response, and timing of the response, etc. reflects objectively the contractor's collaborating enthusiasm to advice. Therefore, it is suitable for use in evaluating a level of second collaborating enthusiasm. If an insurance contractor makes a quick and sure response to an advice conscientiously, it may be the sign that the future risks of an insured object are likely to go down, and the insurance descriptions are adjusted for alleviating the load of contractor.

If the present insurance descriptions adjusting device is further provided with advice response reliability judging means for judging the reliability of a response made to an advice and the insurance descriptions adjusting means adjusts the insurance descriptions based on the reliability of response as judged by the advice response reliability judging means, an insurance company can grasp a co-relationship between the effect of advice and the implemented content of advice. Therefore, the adjusting of insurance descriptions can be worked out more appropriately. Contents (response to advice) implemented to the same advice are not always the same. Possible ill-effect to be caused by a low-reliability response can be curtailed by limiting the margin of insurance descriptions adjustment.

The present invention further offers a status data acquiring terminal device, which constitutes, together with the insurance descriptions adjusting device, an insurance descriptions adjusting system.

The status data acquiring terminal device comprises status data acquiring means for acquiring status data, status data transmitting means for transmitting status data, and reacquisition notifying means for implementing a status data reacquisition notice. The status data acquiring terminal device can communicate with the above described insurance descriptions adjusting device for evaluating the first collaborating enthusiasm using an information regarding the state of response made to a status data reacquisition notice implemented by the collaborating enthusiasm evaluating means.

The insurance descriptions adjusting device can properly set insurance descriptions to those objects of insurance whose future risks are likely to go down, by making use of an information regarding lever of first collaborating enthusiasm. The level of first collaborating enthusiasm can be evaluated in the form of an objective index by using a state of response made to a reacquisition notice. Reacquisition notice implementing means can be disposed in a terminal device, not in an insurance descriptions adjusting device.

If a terminal device is provided with reacquisition notice implementing means, there is no need of securing means of communicating with the insurance descriptions adjusting device for receiving a reacquisition notice. Such terminal device will be an appropriate status data acquiring terminal device for constituting, together with an insurance descriptions adjusting device, an insurance descriptions adjusting system of the present invention.

In the status data acquiring terminal device, if it further comprises reacquisition term judging means for judging whether or not a certain term void of status data reacquisition has continues for a certain specific term and a reacquisition notice is implemented as soon as the certain specific term continues, the contractor's consciousness about the importance of reacquiring variable status data on continual basis will be improved. At the same time, the insurance company will have an increased possibility of acquiring the status data on continual basis; which will enable to determine more proper insurance descriptions.

If it further comprises reacquisition timing judging means for judging a certain specific timing that comes prior to the date on which the status data reacquisition is due and a reacquisition notice is implemented as soon as the reacquisition timing judging means judged that it is the certain specific timing, occurrence of such a circumstance under which the insurance descriptions are compelled to be adjusted for increasing a contractor's load because necessary status data are in short supply can be prevented.

The present invention further offers an advice responding terminal device that can constitute, together with the insurance descriptions adjusting device, an insurance descriptions adjusting system.

The advice responding terminal device comprises advice display means for displaying advice, and advice response transmitting means for transmitting a state of response made to an advice displayed on the advice display means to the insurance descriptions adjusting device. The terminal device being an advice responding terminal device can communicate with the above described insurance descriptions adjusting device, where the collaborating enthusiasm evaluating means evaluates a level of second collaborating enthusiasm by using an information regarding a state of response made to an advice for lowering the risk of an insured object.

The terminal device displays an advice delivered from the insurance descriptions adjusting device, etc. for lowering the risk of an insured object. It can transmit an information regarding a state of response made to the advice to insurance descriptions adjusting device.

The advice responding terminal device is a device suitable for constituting an insurance descriptions adjusting system, together with an insurance descriptions adjusting device which properly adjusts insurance descriptions with an insurance object whose future risks are likely to go lower..

The present invention further offers an advice device for use, for example, in an independent insurance agent working between insurance companies and insurance contractors.

The advice device intermediates the above-described insurance descriptions adjusting device, where the collaborating enthusiasm evaluating means evaluates a level of second collaborating enthusiasm by using an information regarding a state of response made to an advice given for lowering the risk of an insured object, and the above-described advice responding terminal device. The advice device generates an advice or substitutes the evaluation work on a level of second collaborating enthusiasm; or does both of the above functions.

The advice device may be disposed in an independent insurance agent who intermediates between insurance companies and insurance contractors. It generates advice and evaluates a level of second collaborating enthusiasm on behalf of insurance descriptions adjusting device of an insurance company.

Contents of advice and the evaluation thereof are quite influential to the adjusting of insurance descriptions. If management view point of an insurance company is stressed too much in generating an advice or making evaluation thereon, an insurance contractor might suffer a disadvantage. On the contrary, if reduction of a contractor's load is stressed too much, an insurance company might suffer in the financing.

Taking advantage of the present advice device, a third party (insurance agent) who is independent of insurance company and insurance contractor can generate an advice that is impartial to both of the parties, or work out a fair evaluation on a level of second collaborating enthusiasm.

The present invention further offers a computer-readable recording medium for recording an insurance descriptions adjusting program. The recording medium stores an insurance descriptions adjusting program for having processing procedure of the above-described insurance descriptions adjusting method executed by a computer.

The present invention further offers an insurance descriptions adjusting program. The program is for having processing procedure of the insurance descriptions adjusting method executed by a computer.

The present invention further offers a status data acquiring program. The program is for operating a computer as means of the above-described status data acquiring terminal device.

The present invention further offers an advice responding program. The program is for operating a computer as means of the above-described advice responding terminal device.

The present invention further offers an advice program. The program is for operating a computer as an arm of the above-described advice device.

The present invention further offers a computer-readable recording medium for recording a status data acquiring program, an advice responding program, and an advice program. The program is for operating a computer as an arm of the above-described status data acquiring terminal device, advice responding terminal device, and advice device.

## BRIEF DESCRIPTION OF THE DRAWINGS

FIG. 1 shows the outline structure of an insurance descriptions adjusting device which can be used for carrying out the insurance descriptions adjusting method in accordance with an exemplary embodiment of the present invention.

FIG. 2 shows the outline structure of an exemplary health measurement apparatus in the present invention.

FIG. 3 shows an example of calendar-wise relationship between a premium payment date and a premium adjustment term.

FIG. 4 shows an example of connection in an insurance descriptions adjusting system in accordance with the present invention.

FIG. 5 shows a health measurement apparatus in another setup.

FIG. 6 is a flow chart used to describe the operation of health measurement apparatus.

FIG. 7 is a chart showing the relationship between the BMI value and the mortality rate.

FIG. 8 is a practical example of table of multiplying factors used for adjusting premium with respect to implementation of an advice.

FIG. 9 is a chart showing how the health condition is judged based on status data.

FIG. 10 is a practical example of table of multiplying factors used for adjusting premium with respect to the reacquisition of status data.

FIG. 11 is a practical example of table of multiplying factors used for adjusting premium with respect to the health condition based on status data.

FIG. 12 shows the outline structure of an insurance descriptions adjusting device used for an automobile insurance, in accordance with an exemplary embodiment of the present invention.

FIG. 13 shows the outline structure of an automobile measurement apparatus in accordance with an exemplary embodiment of the present invention.

## DESCRIPTION OF THE PREFERED EMBODIMENTS

Exemplary embodiments of the present invention are described referring to the drawings.

Described in the following are some of practical examples embodied in accordance with the present invention, it is to be understood that the examples are not intended to limit the technical scope of present invention.

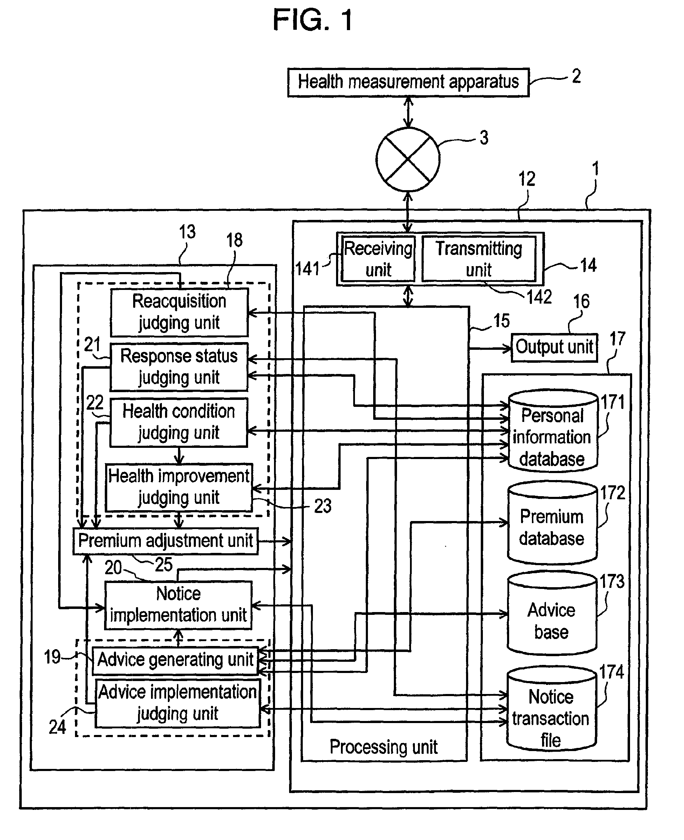

FIG. 1 shows the outline structure of an insurance descriptions adjusting device used for carrying out the insurance descriptions adjusting method, in accordance with an exemplary embodiment of the present invention,.

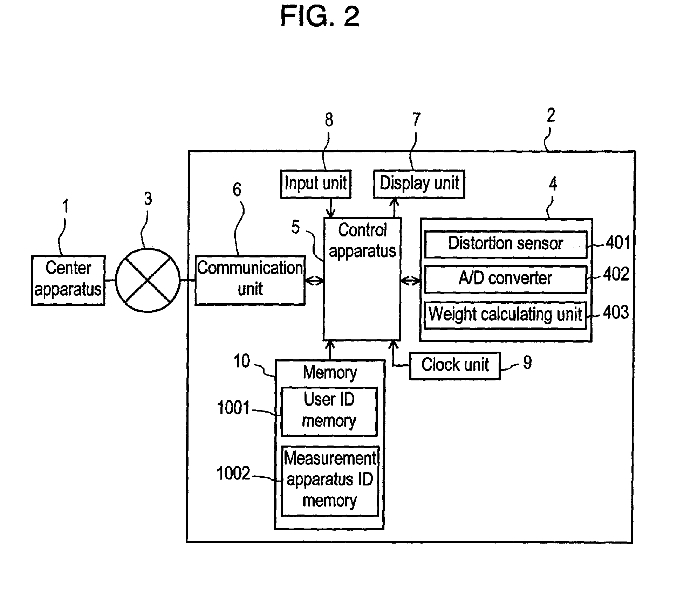

FIG. 2 shows the outline structure of an exemplary health measurement apparatus in the present invention.

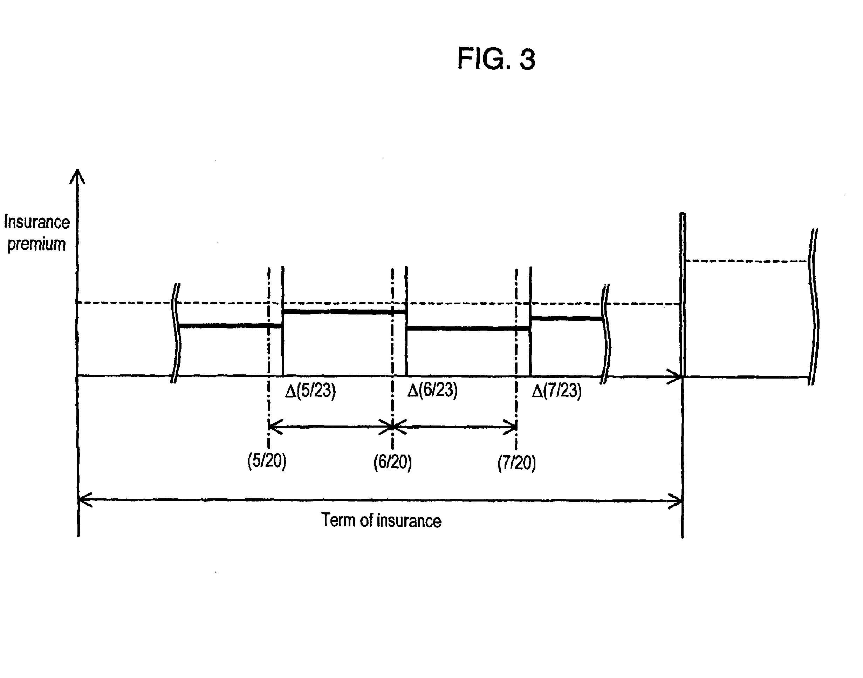

FIG. 3 shows an example of calendar-wise relationship between a premium payment date and a premium adjustment term.

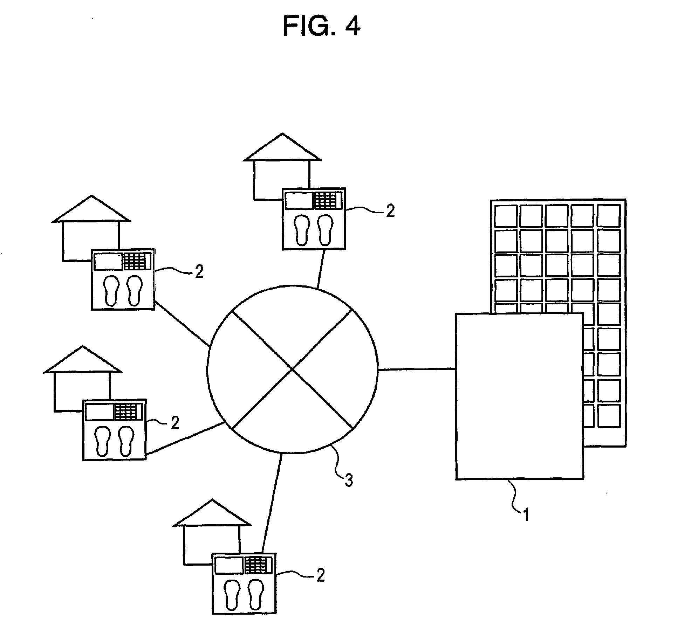

FIG. 4 shows an example of connection in an insurance descriptions adjusting system in the present invention.

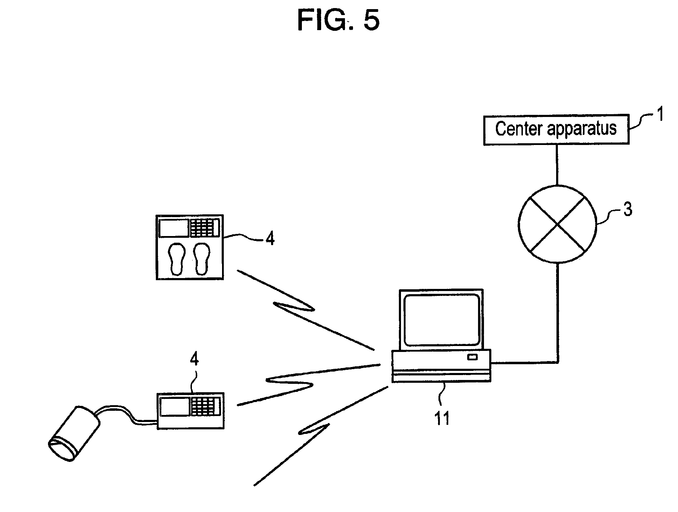

FIG. 5 shows how a plurality of health measurement apparatus is structured using a plurality of measuring means and personal computer.

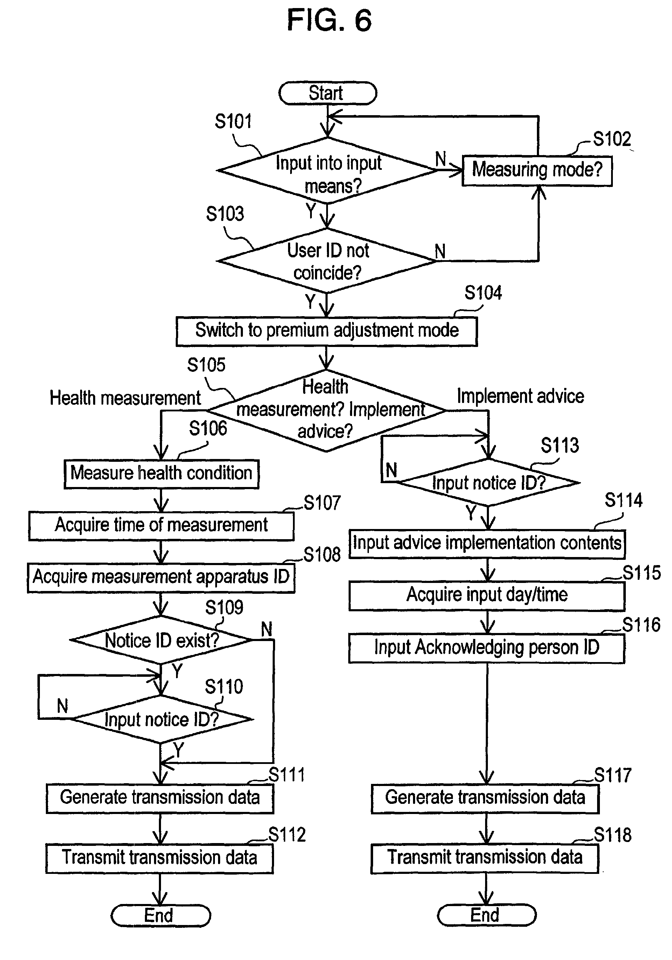

FIG. 6 is a flow chart used to describe the operation of health measurement apparatus.

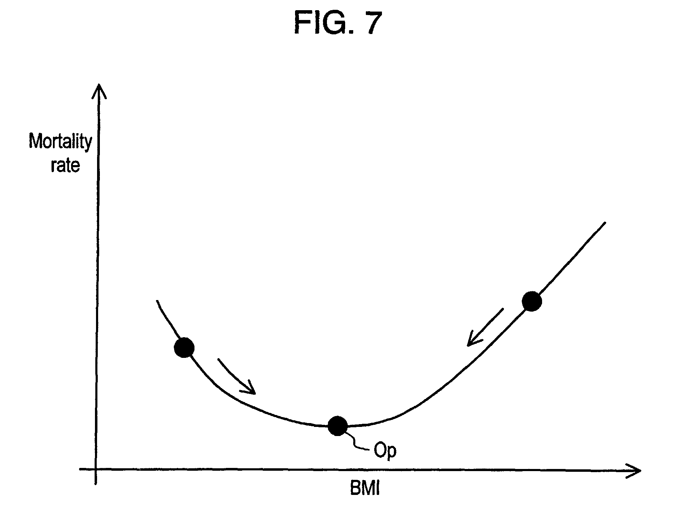

FIG. 7 is a chart showing the relationship between the BMI value and the mortality rate.

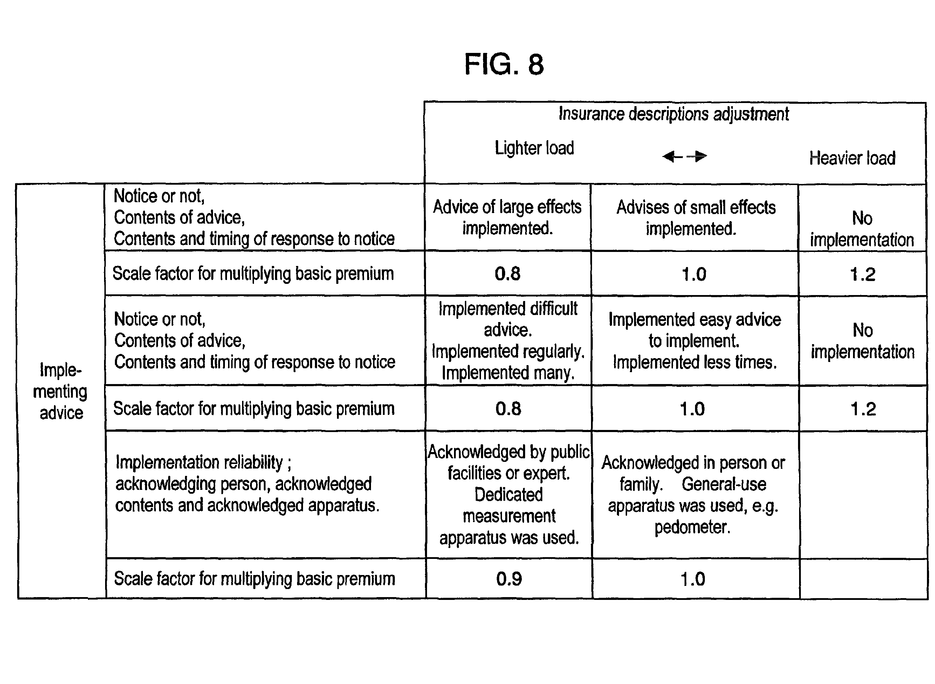

FIG. 8 is a practical example of table of multiplying factors used for adjusting premium with respect to implementation of an advice.

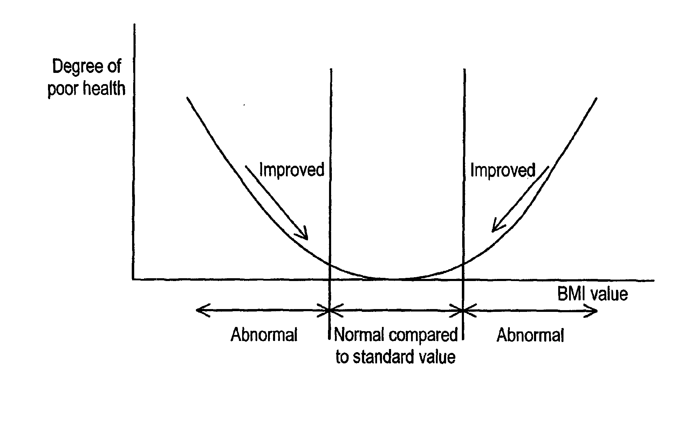

FIG. 9 is a chart showing how the health condition is judged based on status data.

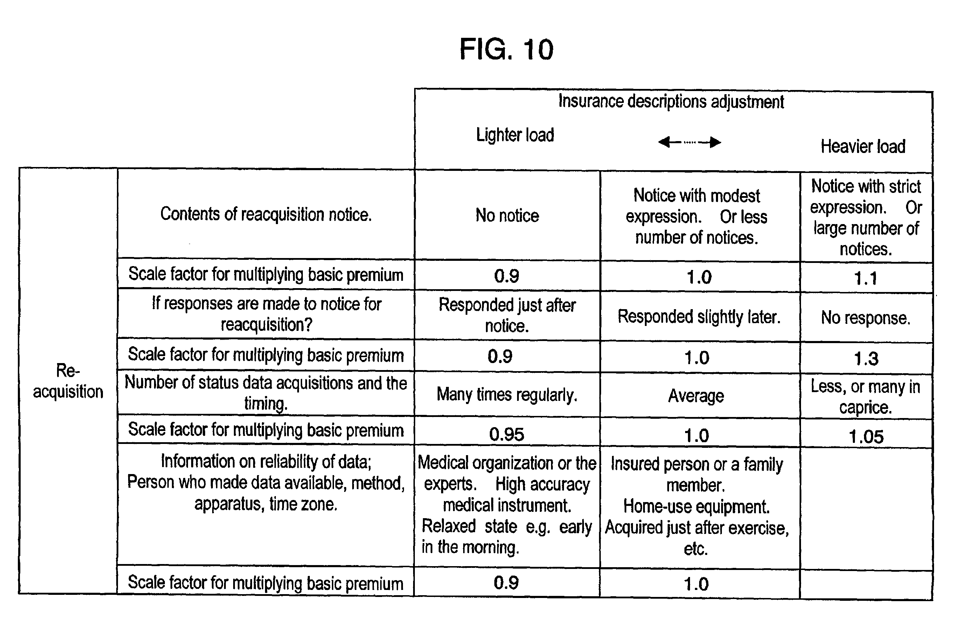

FIG. 10 is a practical example of table of multiplying factors used for adjusting premium with respect to the reacquisition of status data.

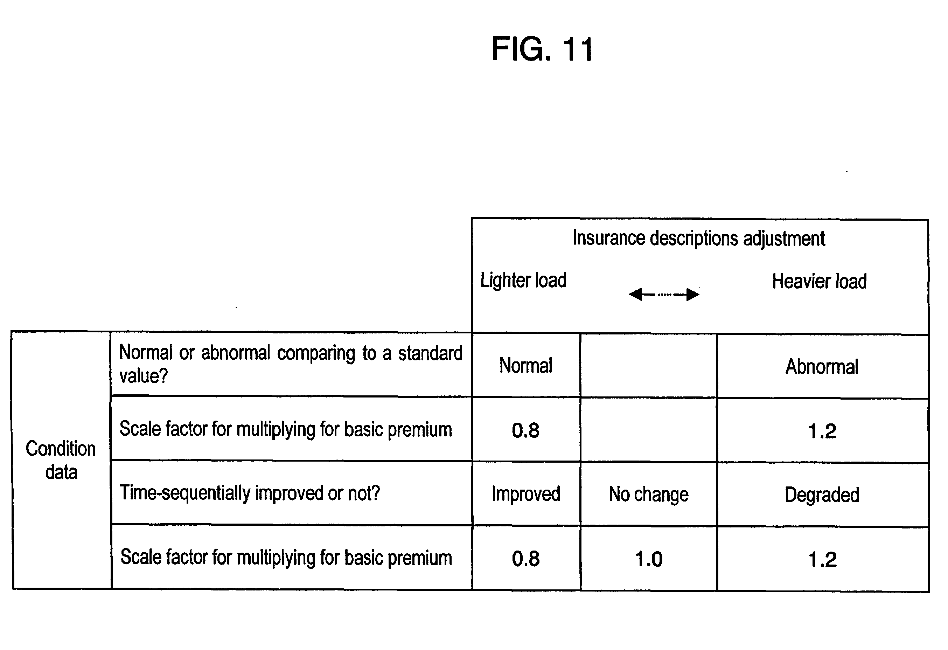

FIG. 11 is a practical example of table of multiplying factors used for adjusting premium with respect to the health condition based on status data.

An insurance descriptions adjusting method in accordance with the present embodiment of invention is a method for adjusting, from time to time within an insurance term, the premium payable each month by an insurance contractor to an insurance company with a renewal type term-insurance on life, for example.

Basic method for setting monthly premium at the beginning of an insurance contract in the present invention remains the same as that in the conventional renewal type term-insurance. That is, the basic amount of premium is determined based on an expected mortality rate determined by the age and gender group of an insured person, the amount of death benefit payable to beneficiary, the length of insurance term, the assumed interest rate, the expected business expenses rate, etc.

In a case where a risk category is subdivided by the BMI values, the blood pressure values, etc. into sub-segments, a person who exhibited favorable BMI values, blood pressure values, etc. at the diagnosis made at the beginning of a contract, a certain discount is provided in the basic premium.

As shown in FIG. 3, the basic premium fixed for a certain insurance term, represented with a dotted line, is adjusted monthly to a level as indicated with thick solid lines. The adjustment is made for a term defined by triangle marks, or adjustment dates, after referring to a one-month term which begins at a certain specific date prior to the adjustment date, or a date indicated by a chain line, retrogressing one month therefrom. If the adjustment date is June 23, the one-month term to be referred to is a term starting May 20 ending June 20.

As shown in FIG. 4, an insurance descriptions adjusting device (hereinafter referred to as center apparatus) 1 used for conducting an insurance descriptions adjusting method in the present embodiment is linked with a plurality of health measurement apparatus 2 for measuring health condition of insured person, by means of public telephone lines, the internet3, etc.. The center apparatus 1, the health measurement apparatus 2 that can communicate with the center apparatus 1, and other relevant apparatus constitute an insurance descriptions adjusting system.

The health measurement apparatus 2, which comprises means for measuring blood pressure, blood sugar level, electrocardiogram, temperature, weight, height and the like items related to health condition of an insured person, is disposed at home, in public medical organizations, or the like places.

For the purpose of measuring the body weight, a measuring unit 4 as shown in FIG. 2 is provided. The unit corresponds to an electronic scale comprising a distortion sensor 401, an A/D converter 402, and a weight calculating unit 403.

In the measuring unit 4, the distortion sensor 401 generates electric signals representing the body weight of an insured person. The signals are digitized by the A/D converter 402 for conversion at the weight calculating unit 403 into the body weight of insured person.

The health measurement apparatus 2 is provided, besides the measuring unit 4, with a control apparatus 5, a communication unit 6, an input unit 7, a display unit 8, a clock unit 9, and a memory 10, etc.

The control apparatus 5 is formed of e.g. a microprocessor, and controls the entire health measurement apparatus 2.

The communication unit 6 is means to communicate with the center apparatus 1. Modems and network interface card (NIC) are used for the purpose.

The display unit 7 displays condition data measured by the measuring unit 4, or information received through communication unit 6 from the center apparatus 1. A liquid crystal display device (LCD), for example, is used for the display unit.

The input unit 8 is normally formed of a keyboard or a ten-key board. This is used for inputting condition data values of an insured person, a user identifier (user ID), etc. by hand. A voice print analysis unit, a voice recognition unit and the like sound processing unit may be used as one of the input unit 8 for inputting a user ID.

Data coming to the input unit 8 are controlled by the control apparatus 5 to be either transmitted to the center apparatus 1 via communication unit 6, displayed at the display unit 7, or stored in the memory 10.

The acquisition of status data as used in the present invention refers to the measurement or the inputting of condition data via measuring unit 4 or input unit 8.

The clock unit 9 is means to specify the date and time when a measurement is done at the measuring unit 4, or when varieties of information are delivered to the input unit 8. A system clock, for example, is used for the purpose.

The memory 10 is means for temporarily storing, under the control of control apparatus 5, the data coming from measuring unit 4, input unit 8 and clock unit 9. A rewritable flash memory, for example, is used for the memory 10.

The memory 10 has a user ID memory 1001 for storing user ID. A user ID is registered in the ID memory 1001 when a health measurement apparatus 2 is purchased.

Outline of an exemplary procedure for registering a user ID in the ID memory 1001 is as follows:

A user inputs any preferred user ID in the input unit 8, which is transmitted, under the control of control apparatus 5, to the center apparatus 1 via the communication unit 6 by way of public line or the internet 3. Upon receiving the user ID, the center apparatus 1 checks if it overlaps with a user ID already registered. After the inputted user ID is confirmed not to be overlapping with any already-registered ID, the inputted user ID is registered as the authorized user ID at the center apparatus 1. After it is registered in the center apparatus 1, a signal telling the registration is sent to the health measurement apparatus 2 through public line or the internet 3. According to the control of the control apparatus 5, the user ID thus input is registered in the user ID memory 1001 as the officially approved user ID.

If the center apparatus 1 finds the inputted user ID overlapping with an already-registered ID, the center apparatus 1 sends a message requesting to input a different user ID back to the communication unit 6 via public line or the internet 3. The message is displayed on display unit 7 in accordance with the control of control apparatus 5. The above procedure is repeated until it is confirmed that a newly inputted user ID does not overlap with the already-registered, or the procedure is suspended.

Besides the above-described way of user ID registration, the center apparatus 1 may generate a user ID that does not overlap with already-registered ID, and propose a user registering it as his or her ID, if the user wants to do so.

Depending on needs, the user ID memory 1001 may store name of an insured person corresponding to user ID. When user ID stored in the user ID memory 1001 is input from input unit 8, the name of an insured person corresponding to the user ID is also displayed on the display unit 7 by the control of control apparatus 5.

In addition to the user ID memory 1001, the memory 10 has a measurement apparatus ID memory 1002 for storing measurement apparatus ID which identifies the health measurement apparatus. The measurement apparatus ID is put into the measurement apparatus ID memory 1002 when the apparatus is shipped from a firm. The measurement apparatus ID memory 1002 may store, in addition to the measurement apparatus ID, a measurement method ID which identifies a method as to which part of an insured person's body is to be measured.

The user ID, the measurement apparatus ID and the measurement method ID are read out by the control apparatus 5 whenever necessary.

The basic structure of health measurement apparatus 2 remains the same even when kinds or numbers of the condition data to be measured varies. When it is needed to measure a plurality of condition data, one may use either a single health measurement apparatus 2 equipped with measuring unit 4 capable of measuring varieties of condition data, or a plurality of health measurement apparatus 2.

There are two modes using a plurality of health measurement apparatus 2.

Using a plurality of health measurement apparatus 2, each having different measuring unit 4; or using a health measurement apparatus as shown in FIG. 2, in which certain constituent sectors are integrated into a unit while only the means for measurement is provided in pluralities for meeting various needs of measurement.

An example of the latter mode is shown in FIG. 5. The control apparatus 5, the communication unit 6, the input unit 8, the clock unit 9, and the memory 10 are integrated into a personal computer 11, while a plurality of measuring units 4, each for measuring different condition data, is connected thereto by means of infrared ray, wireless, etc. The personal computer 11 and the measuring units 4 may of course be connected by signal lines, or by making use of the power supply line.

Although the measurement itself is worked out by the respective measuring units 4, communication with the center apparatus 1 and other various calculations are conducted by the personal computer 11.

The latter mode provides more convenience, because various kinds of condition data and user ID can be controlled altogether at the personal computer 11.

In any case, the more the kinds of condition data is available, the higher is accuracy level of knowledge about an insured person's health condition.

Condition data made available by the health measurement apparatus 2 is used as a key element in adjusting the premium. The BMI value and the blood pressure value, among other values, may fluctuate substantially after the initial diagnosis by an insurance company until end of the insurance term, or even between the diagnoses. This means that even if premium (insurance descriptions) is determined based on the initial diagnosis, the risks may shift within the term of insurance. Therefore, it bears a substantial advantage to adjust premium based on status data which is changing from time to time.

When sending status data from the health measurement apparatus 2 to the center apparatus 1, the health measurement apparatus 2 is put into operation in accordance with the procedures S101 - S112 shown in a flow chart FIG. 6.

Suppose the health measurement apparatus 2 is provided with two modes, a measurement mode where the measuring unit 4 is used simply as a measuring device (as an ordinary weight scale), and a premium adjustment mode for measuring condition data and sending the data to center apparatus 1 for the premium adjustment. In order to switch the health measurement apparatus 2 into the premium adjustment mode, a user ID, for example, is used.

When the health measurement apparatus 2 is put into operation, an input coming to the input unit 8 is watched (S101). If there is no input in the input unit 8, the health measurement apparatus 2 is set to the measurement mode (S102).

When there is an input in the input unit 8 , the contents of input is compared with the user ID stored in the memory 10 at user ID memory 1001 (S103). Unless contents of the input coincide with the user ID stored in the user ID memory 1001, the measurement mode is maintained.

If the contents of input is found out to be in coincidence with the user ID stored in the user ID memory 1001, the health measurement apparatus 2 is switched into the premium adjustment mode (S104).

As soon as the health measurement apparatus 2 is switched into the premium adjustment mode, a question arises; measuring health condition, or inputting a response to advice (S105).

When the measuring of health condition is selected at S105, the measurement unit 4 is set to be ready for measuring the condition data. After the measurement unit 4 finishes measurement of condition data (S106), the condition data measured by the measurement unit 4 and identified with user ID is stored in the memory 10, under the control of control apparatus 5.

The date and time when the condition data is acquired are given from the clock unit 9, under the control of control apparatus 5 (S107). These are identified with user ID and stored likewise in the memory 10.

Next, measurement apparatus ID is acquired from the measurement apparatus ID memory 1002 of memory 10 (S108).

Whether there exists a notice reached from the center apparatus 1 to the health measurement apparatus 2 or not (the notice corresponds to a reacquisition notice, which will be described later) is judged at S109.

In a case where there is no such notice, a data is generated using the user ID, condition data, date and time when measured, measurement apparatus ID, etc. stored in the memory 10; which data is to be transmitted to the center apparatus 1 (S111).

That is, the above transmitting data contains, for example, user ID, condition data, date and time when measured and measurement apparatus ID.

As soon as the transmitting data gets ready, the communication unit 6 transmits it to the center apparatus 1 via public line or the internet 3 (S112).

If at S109 there is a notice delivered from the center apparatus 1 to the health measurement apparatus 2, the notice ID is requested, and, upon receiving it (S109), a transmitting data including the notice ID also is generated.

A center apparatus 1 in accordance with the present embodiment is intended for installation at, for example, an insurance company or the agent. The apparatus comprises a sector formed with a computer 12 and a sector formed with a dedicated apparatus 13.

The computer 12 has a typical computer structure comprising a communication unit 14 (a receiving unit 141, a transmitting unit 142), a processing unit 15, an output unit 16 and a memory 17.

The communication unit 14 is formed of various kinds of modems, NIC, etc., which is linked with the health measurement apparatus 2 via public line or the internet 3.

The processing unit 15 controls input/output at the memory 17 in accordance with a web server or a program, e.g. common gateway interface (CGI).

The output unit 16 is formed of a cathode ray tube (CRT), an LCD or the like display device, or a printer.

The memory 17 is formed of a large capacity hard disk drive or the like device.

In the memory 17, a personal information data base 171, a premium data base 172, an advice base 173, a notice transaction file 174, etc. are structured.

The personal information data base 171 is a data base for storing transmitting data including user ID, status data, date and time when measured, measurement apparatus ID, etc. In addition, the personal information data base 171 stores measurer ID for identifying a person who measures a status data, measurement method ID, etc.

The premium data base 172 stores information describing a relationship between the age, gender, sick history, etc. and the mortality rate, disease suffering rate, etc., furthermore, statistics with respect to premium.

The advice base 173 is a rule base regarding advice, which base stores predetermined rule and advice, difficulty level in implementing an advice, recommendation frequency, prospective size of health improvements when an advice is implemented, etc., correlated among each other.

The notice transaction file 174 is a file for storing contents of notice and state of response to notice. The file 174 stores information regarding number of notices implemented, method of notifying, difficulty level in implementing an advice, recommendation frequency, responded or no response, contents of the response, response timing, reliability information about a response, user ID, etc. with a notice ID for identifying a notice, for example, as the key. The file 174 may be initialized or partly deleted after a certain reference term for adjusting premium continues and the premium adjusting procedure is finished.

The dedicated apparatus 13 comprises a reacquisition judging unit (which corresponds to the reacquisition term judging means) 18, an advice generating unit 19, a notice implementation unit 20, a response status judging unit 21, a health condition judging unit 22, a health improvement judging unit 23, an advice implementation judging unit 24, an insurance premium adjustment unit (which corresponds to the insurance descriptions adjusting means) 25, etc.

The reacquisition judging unit 18 conducts judgement to each of user ID stored in the personal information data base 171 as to whether a certain term void of status data reacquisition continues for a certain predetermined specific term. If it is found out that the certain term reaches the predetermined term, the notice implementation unit 20 is started. The reacquisition judging unit 18 judges whether subsequent status data are acquired continually or not, after an initial status data was acquired for determining basic premium.

The advice generating unit 19 generates an advice for improving health condition aiming to lower the risks at an insured person, based on status data stored in the personal information data base 171. The advice is delivered to the notice delivering unit 20.

When generating an advice, the advice generating unit 19 refers to the premium data base 172 and the advice base 173, besides the status data.

Reference to the premium data base 172 is made for the purpose of implementing an advice that matches the age, gender and sick history. Reference to the advice base 173 makes it possible to generate a proper advice matching the status data, and to determine a difficulty level of implementation, a recommendation frequency, a prospective size of health improvements when an advice is implemented, etc.

The notice implementation unit 20, after it is started by the reacquisition judging unit 18 or advice generating unit 19, determines means of notice, e.g. electronic mail, telephone call, actual visit, and notice ID for identifying relevant notice. Then it generates a notice containing the notice ID, for transmission or outputting from the transmitting unit 142 or the output unit 16.

A reacquisition notice urging the reacquisition of status data is generated when the notice implementation unit 20 is started by the reacquisition judging unit 18. Meanwhile, a notice containing an advice for lowering risks of an insured person is generated when the notice implementation unit 20 is started by the advice generating unit 19.

The notice implementation unit 20 transmits or outputs a notice, and stores notice ID, notice means ID for identifying means of notifying, difficulty level of implementing the notice, recommendation frequency, prospective size of health improvements when an advice is implemented, etc. in the notice transaction file 174.

As soon as a certain specific term, which is referred to in adjusting premium of a certain month, ends, the response status judging unit 21 makes judgement on a state of the status data acquisition during the specific term, and on a state of response made to notice of status data reacquisition. The judgement on a state of status data acquisition during the specific term is conducted with respect to status data, the date and time when measured, etc. stored in the personal information data base 171. As the result, number of status data reacquired during the term, date and time when the status data were measured, as well as measurer ID, measurement method ID, measurement apparatus ID, etc. are made available to each of respective status data.

A level of first collaborating enthusiasm shown by an insurance contractor, which being a reflection of consciousness of an insured person or insurance contractor towards the status data reacquisition, can be evaluated in the form of an objective index, by making use of information on the number of status data reacquisitions and the date and time when measured (acquisition timing). The measurer ID, measurement method ID, and measurement apparatus ID may be used for putting a state of status data acquisition into an objective index. The index can be used in evaluating the reliability of status data.

The judgement on a state of response made to status data reacquisition notice is conducted with respect to information about a number of notices, means of notifying, responded or no response, contents of the response, timing of the response, etc. stored in the notice transaction file 174. In practice, a number of notices implemented during the term, for example, is obtained through data processing.

The number of notices and means of notifying are part of contents of reacquisition notice, which correspond to cost of an insurance company on reacquisition notice. While the information about a reacquisition notice was responded or no response, contents of the response, timing of the response represents a state of response made to reacquisition notice. A level of first collaborating enthusiasm shown by an insurance contractor, which is a reflection of consciousness of an insured person or insurance contractor about the status data reacquisition, can be put into an objective index, by making use of the information on contents of reacquisition notice and state of response made to reacquisition notice.

After finishing all of the processing, the response status judging unit 21 delivers the processed results to the insurance premium adjustment unit 25.

After the term is closed, the health condition judging unit 22 compares status data stored in the personal information data base 171 with predetermined standard value. The health condition judging unit 22 further judges whether a certain insured person is in normal health condition or not, and outputs the result of judgment to the insurance premium adjustment unit 25, and stores it in the personal information data base 171 after collating with user ID.

The health improvement judging unit 23 determines relationship (time sequential change) of the health condition information of an insured person as judged by the health condition judging unit 22 for the present term, in relation to the health condition information as judged by the health condition judging unit 22 for a past term and stored in the personal information data base 171, by using differential calculus or the like means. Thereby, whether the insured person's health condition is improving or not is judged, and the result of judgement is delivered to the insurance premium adjustment unit 25.

Upon closing of the term, the advice implementation judging unit 24 makes judgement in relation to information about a number of notices, means of notifying, difficulty level of implementing an advice, frequency of recommendation, prospective size of health improvements when an advice is implemented, responded or no response, contents of the response, timing of the response, the reliability of response, etc. stored the notice transaction file 174 collated with notice ID.

Since each of the notices is provided with its own notice ID, whether it is responded or not can be seen by checking a notice ID attached to the response.

The number of notices and means of notifying correspond to cost of an insurance company on notice including advice. The above items plus the difficulty level of implementing an advice, the frequency of recommendation, the prospective size of health improvements when advice is implemented represent contents of an advice.

Information regarding if an advice was responded, or no response, contents of the response, and timing of the response represent a state of response made in reply to the advice.

A level of second collaborating enthusiasm shown by an insurance contractor in reducing the risk of an insured person, which is a reflection of consciousness of an insured person or insurance contractor towards reduction of risk of an insured person, can be evaluated in the form of an objective index, by making use of information on contents of advice and state of response made to the advice, including the reliability of response made to the advice.

The insurance premium adjustment unit 25 adjusts premium by making use of at least one of the results of judgement by the response status judging unit 21, health condition judging unit 22, health improvement judging unit 23 and advice implementation judging unit 24.

Premium adjustment at the insurance premium adjustment unit 25 is conducted by multiplying a basic premium, for example, with a certain factor determined based on results of judgement by the response status judging unit 21, health condition judging unit 22, health improvement judging unit 23 and advice implementation judging unit 24. A premium after the adjustment is shown by the following exemplary formula:

(basic premium) x (multiplying factor representing a level of collaborating enthusiasm shown by an insurance contractor)

A practical example of collaborating enthusiasm evaluating means in an insurance descriptions adjusting device in the present invention is formed of at least one of the response status judging unit 21 and the advice implementation judging unit 24, plus a combination of the response status judging unit 21, the health condition judging unit 22 or health improvement judging unit 23, and the advice implementation judging unit 24.

Now operation of the total insurance descriptions adjusting system is described in the following.

After the start of an insurance term, the health measurement apparatus 2 measures an insured person with respect to the health condition. Although the health measuring procedure was already described referring to FIG. 6, some additional description is made here.

An insured person is measured with respect to such items as the BMI value, percent of body fat, blood pressure, etc. related with the health conditions. However, it can not be always true that those insured persons whose measured status data values are the same have the same values in reality.

Health conditions may be measured by an insured person itself, one of the family members, a medical doctor, a nurse, an athletics trainer or the like person related with the health condition of an insured person. Level of the measuring technique, however, varies depending on person who measures. Therefore, the reliability of measurement data varies. The reliability varies also depending on a measurement apparatus used, and a method of measurement. For example, the reliability of a blood pressure data is higher when it is measured with an apparatus which measures at the upper arm, than it is measured with an apparatus which measures at the wrist.

When it is measured at home, not at a medical organization, technical level of a measurer may not be high enough and accuracy level of measurement apparatus is generally inferior to that at medical organizations. The results of measurement can not be appropriate and fair unless they are treated taking the above facts into consideration.

The reason why measurement apparatus ID, etc. are required at the above-described process step S108 is that these items give influence to the reliability of status data. Values representing a level of the reliability are stored in the memory 17 of center apparatus 1, collated respectively with measurement apparatus ID and the like ID showing a state of status data acquisition.

Measurement apparatus ID and measuring method ID can be determined beforehand in accordance with specification of the apparatus. So, these may be put into memory 10 of respective health measurement apparatus 2 at the shipment from a firm. In a case where one measuring method is selectable among the pluralities of methods, the input unit 8 or display unit 7 of an apparatus should be devised for making such selection. As to measurer ID, it should be categorized in advance into groups according to his or her career in the medical activities or experience in operating the apparatus. The ID may be inputted through an input unit 8 of health measurement apparatus 2 before data transmission.

As soon as a transmitted data is stored in the center apparatus 1 at personal information data base 171, the advice generating unit 19 is started.

Upon starting of the advice generating unit 19, the personal information data base 171 reads out status data. Age, gender, sick history, etc. are read out of the personal information data base 171 in accordance with a user ID corresponding to status data, and the corresponding mortality rate and other data are extracted from the premium data base 172.

As illustrated in FIG. 7, relationship between the status data such as the BMI value, percent of body fat, cholesterol value, etc. related to health condition of an insured person, exhibited in the horizontal axis, and the risks such as percent of emerging symptom, disease rate, mortality rate, etc. exhibited in the vertical axis, takes a valley-shaped curve in most cases.

That is, the health-related status data has its optimum value Op, at which the mortality rate and the like risks hit the bottom. The mortality rate and other risks increase when it is higher than, or lower than, the optimum value. Increased risks lead to a higher premium, and of course it means a possibility of health trouble at the insured person.

The advice generating unit 19 first judges whether a status data is greater or smaller than the optimum value. A basic rule for generating an advice is; telling to lower it if the status data is greater than the optimum value, while to increase it if the status date is smaller than the optimum value.

The BMI value, for example, is used for advising an optimum weight. A BMI value smaller than the optimum value signifies a too less weight. Then, a generated advice will be, "Take well-balanced meals every day", or "Don't skip meal !", etc.

On the other hand, a BMI value greater than the optimum value means that it has a too much body weight. Then, a generated advice will be for lowering the weight, "No snacks between meals", "No eating just before going to bed", "More physical exercise !", etc. If the BMI value is close to the optimum value, it means that the insured person has an ideal weight. Then the advice will be on the exercise and meals suitable to maintain the weight.

Practical examples of advice, such as "Take well-balanced meals every day", have been stored in the advice base 173. An appropriate advice can be extracted by searching the advice base 173 in accordance with a condition determined by judgement.

Besides the above-described advice, the advice base 173 stores information about a difficulty level of implementing an advice, frequency of recommendation, prospective size of health improvements when an advice is implemented, etc. Information as to a difficulty level of implementing an advice and the frequency of recommendation are also delivered from the advice generating unit 19 to the notice implementation unit 20.

As soon as an advice is delivered to the notice implementation unit 20, a notice containing notice ID and advice is generated after a method of notifying, electronic mail or telephone call, etc., and a notice ID for identifying the notice are determined.

After a notice containing the notice ID and the advice is generated by notice implementation unit 20, the notice is delivered to an insured contractor in accordance with the designated notifying method.

The notifying method ID, the difficulty level of implementing advice, frequency of recommendation, etc. are stored in the notice transaction file 174 with the notice ID as the key.

A notice containing advice transmitted from center apparatus 1 is received by, for example, communication unit 6 of a health measurement apparatus 2. Which notice is displayed on the display unit 7 in accordance with control by the control apparatus 5.

As described in the above, an advice is implemented soon after, for example, condition data of an insured person is measured. It is preferred that an insurance contractor makes measurement of an insured person regularly e.g. once a week. Then, a notice containing advice is also implemented accordingly.

If an insurance contractor inputs information on how an insured person implemented an advice in the input unit 8 of health measurement apparatus 2 every day, the insurance company can readily see a law of cause and effect exhibited between the advice implemented and the condition data.

The process of inputting the implemented advice is shown in FIG. 6, at steps S113 - S118.

When, at the step S105, inputting of advice implementation is selected, it requests input of notice ID. Since it is a response made to an advice, the notice ID is already delivered. As soon as the notice ID is inputted (S113), the input unit 8 is ready to receive contents of implemented advice. The inputted notice ID is collated with the user ID, and stored in the memory 10.

As the contents of implemented advice, calorie intake value, calorie consumption, walking or running time for the day, etc. may be inputted.

As soon as contents of implemented advice is inputted (S114), data and time of the input is acquired from the clock unit 9 in accordance with control by the control apparatus 5 (S115), which are collated with the notice ID and stored in the memory 10.

After the input data and time is acquired, inputting of acknowledging person ID, etc. is requested (S116).

The acknowledging person ID is for identifying a person who give approval on the contents of implemented advice. This is related to the reliability of a response made to an advice. In a case where advice is given on diet therapy, athletics therapy, etc., an insured person does not always have a sufficient knowledge, then he or she can not effectively implement the advice. Also it may not be easy for an insured person itself to precisely follow the progress of implementation, then the contents of input might become somewhat ambiguous.

If a competent dietician or athletic trainer is supervising the implementation by an insured person, the reliability of inputted contents (reliability of response made to an advice) can be assured.

Besides the above-described, the information regarding the reliability of response includes contents of acknowledgement approving a menu provided in accordance with advice, information about an apparatus approved for use in implementing the advised contents, etc. Data about the reliability of response made in reply to an advice is also stored temporarily in the memory 10.

As soon as data about the reliability of response made to advice is inputted, a response data to be sent to the center apparatus 1 is generated based on user ID, contents implemented (response contents), date and time of input, acknowledging person ID and other information regarding the reliability of response made to advice stored in the memory 10 (S117).

When a response data is ready, it is transmitted to center apparatus 1 from the communication unit 6 via a public line or the internet 3 (S118).

The response data is stored, collated with the notice ID, in the notice transaction file 174 of center apparatus 1.

Upon closing of a term which is to be referred to in adjusting the premium, the advice implementation judgement unit 24 makes judgement on a level of collaborating enthusiasm shown by an insurance contractor in implementing an advice (a level of second collaborating enthusiasm), based on the information about a number of notices, means of notifying, difficulty level of implementing a notified advice, frequency of recommendation, responded or no response, information on the reliability of response, etc. stored in the notice transaction file 174, besides the response data.

Results of judgement made by the advice implementation judging unit 24 are delivered to the insurance premium adjustment unit 25.

If the number of notices is high or the notice is implemented through troublesome means, an enthusiasm at an insurance contractor towards improvement of an insured person's health condition is presumably low. Cost at the insurance company increases accordingly; therefore, a level of second collaborating enthusiasm is degraded. If the response is made conscientiously to an advice, it is likely that the contractor is highly enthusiastic towards the health improvement. This will lead the insured person's future health condition to be superior to that of other people in the same generation. Therefore, a level of second collaborating enthusiasm is upgraded.

If the difficulty level of implementing a notified advice is high, or recommendation is made frequently, an insured person is compelled to exert substantial efforts for the implementation. An insured person who is successfully implementing the above tasks is presumably a person who has a high enthusiasm towards the health improvement. Therefore, a level of second collaborating enthusiasm is evaluated to be high.

When a notice is quickly responded, the second collaborating enthusiasm is evaluated on to be high, either.

When an acknowledging person ID indicates that he or she is a medical doctor, or the one in equivalent profession, the reliability of response made to advice is likely to be high. Therefore, the second collaborating enthusiasm is evaluated to be high.

Furthermore, if a continual implementation of an advice is likely to provide a substantial health improvement effect, the second collaborating enthusiasm is evaluated accordingly to be a higher side.

The procedure of judging the reliability of a response to an advice based on the acknowledging person ID, etc., as conducted by the advice implementation judging unit 24 corresponds to the advice response reliability judging means in an insurance descriptions adjusting device in accordance with the present invention.

Upon receiving an information on the level of second collaborating enthusiasm delivered from the advice implementation judging unit 24, the insurance premium adjustment unit 25 adjusts the premium. The adjustment is worked out in favor of lower load at an insurance contractor when the second collaborating enthusiasm is high, while it is worked out towards the higher load when the second collaborating enthusiasm is low.

FIG. 8 shows a practical example of multiplying factors used in adjusting the basic premium with respect to the advice implementation, conducted by the advice implementation judging unit 24 and the insurance premium adjustment unit 25.

The premium adjustment with respect to information as to whether there was a notice containing advice or not, contents of the notice, contents of response made to notice, timing of the response is made in the following manner, as shown in FIG. 8. For example, if advice implementation judging unit 24 judges that "an advice having a substantial prospective effect has been implemented", a level of second collaborating enthusiasm is evaluated accordingly. Then the insurance premium adjustment unit 25 gives a multiplying factor 0. 8 in accordance with the second collaborating enthusiasm, and the premium adjusted accordingly. That is, the premium is provided with a 20% discount. If it is judged that "an advice having a small prospective effect has been implemented", a multiplying factor 1. 0 is provided. In this case, no premium adjustment is worked out. When it is judged that "there is no implementation", a future health improvement is not likely with the insured person. Then, the premium is increased.

For those judgements as, "advice whose difficulty level is high has been implemented", "implemented on regular basis" or "implemented many times", a multiplying factor 0. 8 is assigned. Whereas, for those judgements as, "advice easy to implement has been implemented" or "implemented for small numbers", a multiplying factor 1. 0 is assigned.

As to the person who acknowledges that an advice is duly implemented, the contents of acknowledgement, the acknowledged apparatus; for those judgements as "acknowledged by a training organization or the expert", or "implemented using a dedicated measurement apparatus", a multiplying factor 0. 9 is assigned. For those judgements as "acknowledged by himself, herself or a family member" or "acknowledged on the implementation done by a general-purpose measurement apparatus such as a pedometer", a multiplying factor 1.0 is assigned.

An enthusiasm of positively following the advice would avoid worsening of health conditions. Therefore, it is reasonable to reduce the load of insurance contractor by adjusting premium based on the results of judgements by the advice implementation judging unit 24, the health condition judging unit 22 and the health improvement judging unit 23.

Result of adjustment worked out by the insurance premium adjustment unit 25, status data, advice, etc. are outputted through output unit 18 of a printer or the like device for confirmation by insurance company.

The result of adjustment worked out by the insurance premium adjustment unit 25 is delivered to the health measurement apparatus 2 via transmitting unit 142, to be displayed in the health measurement apparatus 2 at the display unit 7.

The above-described procedure corresponds to an insurance descriptions adjusting method in accordance with the present invention, where the descriptions of an insurance determined based on status data describing values representing the conditions of an object of insurance is adjusted using a computer by taking into account a level of second collaborating enthusiasm shown by an insurance contractor in reducing the risk of an insured object.

If an insured person or insurance contractor is enthusiastic about improving the health condition of an insured person, future health condition of the insured person is likely to be superior to that of other people in the same generation. Even though an insured person or insurance contractor is actually collaborating for the health improvements, the outcome does not necessarily appear immediately in condition data. However, it is reasonable to set an insurance premium that contains the risks likely to change in the future by taking into account a level of second collaborating enthusiasm shown by the insurance contractor, not simply on a status data.

When a level of second collaborating enthusiasm shown by an insurance contractor is sufficiently high, load of the contractor may be alleviated for those whose health conditions are likely to be superior in the future.

On the other hand, if a level of second collaborating enthusiasm at insurance contractor is not high enough, load of the contractor will increase. Then the insurance contractor would try to improve the future health conditions. Thus the insurance company can readily secure an object of insurance whose risks are likely to go lower.

As described in the above, in a case where condition data of insured person is made available once a week, insurance company can offer from time to time an appropriate advice reflecting the status of the time, and at the same time the continuity of condition data is also secured. On the other hand, there may be some cases where an insured person does not make condition data available on regular basis, or the data is not made available as frequent as once a week.

In such cases, a reacquisition notice has to be delivered to the insured person urging reacquisition of condition data. Procedure for such cases is described below.

First, the reacquisition judging unit 18 conducts judgement on each of user ID stored in the personal information data base 171 as to whether or not a term void of reacquisition of status data collated with user ID continues for a certain specific term.

If the reacquisition judging unit 18 judges that the certain specific term continues, a user ID corresponding to the relevant status data is extracted and delivered to the notice implementation unit 20.

The notice implementation unit 20 specifies notice ID and the method of notifying, and then generates a reacquisition notice containing the notice ID and descriptions urging the reacquisition of condition data.

The notice ID and the method of notifying as specified by the notice implementation unit 20 are stored in the notice transaction file 174.

The reacquisition notice generated by the notice implementation unit 20 is delivered from the center apparatus 1 to the health measurement apparatus 2 in accordance with a predetermined procedure. Contents of the notice are displayed on the display unit 7 of health measurement apparatus 2.

Procedures to be followed by an insured person for reacquiring the condition data after seeing the display are as described in FIG. 6, steps S101-S112. Since the reacquisition in the present case is conducted after the reacquisition notice reaches the insured person, the step S110 is carried out until the notice ID is inputted, and the notice ID is contained in the transmitting data.

The transmitting data containing notice ID is sent to the center apparatus 1 to be stored in the personal information data base 171. Among the data carrying the same notice ID stored in the notice transaction file 174, the item "responded or no response" is revised from "no response" to "responded".

Upon closing of a term to which a reference is made in adjusting the premium, the response status judging unit 21 works out judgements on a state of status data acquisition during the term, and on the response made to a reacquisition notice urging reacquisition of status data.

Particulars of the judgement is as described above. If the number of acquisitions of condition data measured during the term is high, a level of first collaborating enthusiasm is evaluated to be high. Also, if the date of measurement is close to the end of a term, a level of first collaborating enthusiasm is evaluated to be high.

Measurer ID, measurement method ID, measurement apparatus ID and the like information related to the reliability are also acquired in judging the reliability of status data. For example, a measurer ID indicating a medical doctor leads to a high reliability; while a measurer ID indicating that the measurement was made by an insured person itself leads to a judgement that the reliability is not that high.

The procedures worked out by the response status judging unit 21 in judging the reliability of status data based on measurer ID and other reliability-related information correspond to the status data reliability judging means in an insurance descriptions adjusting device of the present invention.

Furthermore, cost is judged based on the number of notices delivered during a term, the notifying method and the contents of reacquisition notice. Many notice deliveries signify an additional cost, and lead to a judgement that the enthusiasm of an insured person towards the status data reacquisition should be low. Therefore, a level of first collaborating enthusiasm is evaluated to be low. If a reacquisition notice is duly responded, the first collaborating enthusiasm is evaluated to be high; if it is not responded at all, the first collaborating enthusiasm is evaluated to be low. If condition data is not reacquired despite a reacquisition notice, the number of notices during a term would increase and the first collaborating enthusiasm would be evaluated to be extremely low.

Upon closing of a term, the health condition judging unit 22 and the health improvement judging unit 23 start operating.

The health condition judging unit 22 compares status data stored in the personal information data base 171 with predetermined standard value, and based on the comparison results it judges if an insured person is in good health or in abnormal condition.

In judging by comparison, reference is made to, for example, a graph showing a relationship between the status data and the degree of poor health, as shown in FIG. 9.

In FIG. 9, the horizontal axis represents the BMI value, or a practical example of status data, while the vertical axis represents the mortality rate or the like indication of degree of poor health (an inverse number of good health). Like the graph in FIG. 7, the relationship between BMI value and degree of poor health also exhibits a curve of valley-shape, as shown in FIG. 9. If a BMI value delivered to the health condition judging unit 22 falls within a certain specific region in the vicinity of the bottom of valley, the health condition judging unit 22 judges that it is normal, after making comparison with a standard value. If the BMI value is outside the region, the health condition judging unit 22 judges it to be abnormal.

The health improvement judging unit 23 judges whether or not an insured person's health condition is improving after determining the time sequential change of the health condition as judged by the health condition judging unit 22 for the present term in relation to the health condition (normal or abnormal) as judged by the health condition judging unit 22 for a past term and stored in the personal information data base 171, using differential calculus or the like means.

Instead of using the results of judgement made by health condition judging unit 22, improvement of the health condition of an insured person can also be judged from the BMI value using the graph as shown in FIG. 9. In this case, if inclination between the past BMI value and the present BMI value is greater than a certain specific value and negative, it is judged to be improving; if the inclination is smaller than a certain specific value, it is judged to be no change; if the inclination is greater than a certain specific value and positive, it is judged to be worsening.

Results of judgements made by the response status judging unit 21, health condition judging unit 22 and health improvement judging unit 23 are delivered to the insurance premium adjustment unit 25.

The insurance premium adjustment unit 25 adjust the premium by multiplying basic premium with a factor determined based on the results of judgements made, for example, by the response status judging unit 21, health condition judging unit 22 and health improvement judging unit 23. As already described, premium after the adjustment can be shown by the following formula:

(basic premium) x (multiplying factor representing a level of collaborating

enthusiasm shown by insurance contractor)

When the first collaborating enthusiasm is high, which is the result of judgement by response status judging unit 21, the adjustment is worked out in favor of lowering the load of insurance contractor, on the other hand if the enthusiasm is low, load of insurance contractor is adjusted towards an increase.

If it has a high reliability, a level of first collaborating enthusiasm may be evaluated as it is, or somewhat higher. On the contrary, if the reliability is low, a level of first collaborating enthusiasm is evaluated to be lower. As the result, in a case where the reliability is low, the alleviation of load of contractor might be reduced despite a high first collaborating enthusiasm.

Practical examples of the magnifying factor used in adjusting the premium with respect to the status data reacquisition, which is conducted by the response status judging unit 21 and the insurance premium adjustment unit 25, are shown in FIG. 10.

Regarding contents of reacquisition notice, if the response status judging unit 21 judges that there is "no notice" implemented, a level of first collaborating enthusiasm is evaluated on accordingly. The insurance premium adjustment unit 25 assigns a multiplying factor 0. 9 for the first collaborating enthusiasm. Premium is adjusted by using the factor.

That there was no reacquisition notice implemented means that an insured person has been reacquiring status data continually. The insured person seems to be highly enthusiastic about the health management. Elimination of a reacquisition notice contribute to a cost reduction at insurance company. So, insurance premium is discounted by 10%.

If the notice is judged to have "moderate expression" or the notice was implemented in "less numbers", a multiplying factor 1. 0 is given to. In this case, no adjustment is made with the premium.

In a case where the notice was made using a "strict expression" or the notice was implemented in "large numbers", the insured person's consciousness about the risk management at the moment seems to be low. In such a case, it is difficult to expect that the health condition of insured person will be improved in the future, so that the premium is increased.

Regarding the response made to a reacquisition notice, if it is judged that it was "responded immediately", a multiplying factor 0. 9 is given to. To the "responded slightly later", a multiplying factor 1. 0 is given. To the "no response", a multiplying factor 1. 3 is given.

If a reacquisition notice was not responded and no status data is reacquired, an insurance company will not be able to have knowledge about the health condition of the insured person. And the insured person's consciousness about the health risk management seems to be low. So, the amount of premium increase for such a case is set to be relatively higher than other cases.

Regarding the number of status data acquisitions and the timing, if it is judged to have been provided "many times regularly", a multiplying factor 0. 95 is given to. To the "average", a multiplying factor 1. 0 is given. To the "in less numbers", or "many, but in caprice", a multiplying factor 1. 05 is given.

Reason why premium is increased for the "many, but in caprice" is that what is important with the status data reacquisition is that it is done continually. Even if one is in a good health condition at a moment, it might collapse suddenly unless it is controlled continually thereafter.

There may be such a case where a number of condition data are reacquired intensively by a medical organization regardless of an enthusiasm at an insured person, thenceforth no reacquisition by the insured person. Thus, even though total number of the reacquisitions is high, premium might be increased if the reacquisitions were made only temporarily.

When the health condition of an insured person is excellent, there is normally no need of acquiring a number of status data at one time. In this case, the premium may have a discount even if many condition data are not reacquired. Intensive acquisition of a number of status data at one time may accompany an element other than the collaborating enthusiasm at insurance contractor. For example, an insured person who has got a condition data that represents poor health condition managed to acquire better data repeatedly in order to suppress possible increase in the amount of premium. It may not be fair to provide the premium with a discount simply because many status data are acquired. Thus it can be a reasonable treatment to increase the premium despite a number of condition data made available, when the data are acquired intensively at one time. This is another reasoning supporting the increased premium, besides the affore-described reasoning by the continuity of status data acquisition.

Regarding the reliability with respect to a person who made status data available, method of acquiring the data, apparatus used for acquiring the data, time when it is acquired, if it is judged that the data was "acquired by medical organization or the expert", measured using "high-accuracy medical instrument", or measured in "relaxed state e.g. early in the morning", a multiplying factor 0. 9 is given to, and the premium is discounted. If it is judged that is was acquired by "insured person or a family member", using "home-use equipment", or "just after exercising", a multiplying factor 1. 0 is given to, and the premium is not adjusted.

If the result judged by the health condition judging unit 22 is normal, the premium is adjusted towards a lower load of insurance contractor. On the other hand, if the result judged is abnormal, the premium is adjusted towards an increased load.

If the result judged by the health improvement judging unit 23 shows improving, the premium is adjusted towards a lower load of insurance contractor. On the other hand, if it is judged to be getting worse, the premium is adjusted towards an increased load.

FIG. 11 shows practical examples of the multiplying factor used in adjusting the premium with respect to the health condition described in status data, which is conducted by the health condition judging unit 22 or health improvement judging unit 23, and the insurance premium adjustment unit 25.

If the health condition judging unit 22 judges after comparing with standard value that it is "normal", the insurance premium adjustment unit 25 gives a multiplying factor 0. 8, for example. The premium is adjusted in accordance with the multiplying factor. When it is judged to be "abnormal", a multiplying factor 1. 2 is given to.

As to whether it is improved time-sequentially or not, if the health improvement judging unit 23 judges that it is "improved", the insurance premium adjustment unit 25 gives a multiplying factor 0. 8, for example. The premium is adjusted based on the multiplying factor. When judged "no change", a multiplying factor 1. 0 is given to. If it is judged "degraded", a multiplying factor 1. 2 is given to.

The above-described operations correspond to an insurance descriptions adjusting method in the present invention, where the insurance descriptions determined based on status data describing condition of an insured object are adjusted using a computer based on a level of first collaborating enthusiasm shown by an insurance contractor.

The status data reacquisition is important both for an insured person to control the health condition, and for an insurance company in re-describing the insurance descriptions based on status data. If collaborating enthusiasm shown by an insured person or insurance contractor is high enough, it may be a sign that the insurance contractor has a sufficient consciousness about insured person's health management and that the future health condition will be superior to those other people in the same generation. On the other hand, if the enthusiasm is not high enough at the contractor, it may be an indication that the consciousness about the health management is low and that the present risks described in status data are likely to increase in the future.

That is, an insurance premium that includes a likely risk-shift for the future, in addition to the present risks, can be provided by taking into account a level of first collaborating enthusiasm shown by an insurance contractor towards the status data reacquisition.

If a level of first collaborating enthusiasm at an insurance contractor is sufficiently high, load of the contractor may be alleviated for the insured person whose future health condition is likely to be superior. On the other hand, if a level of first collaborating enthusiasm is not high enough at an insurance contractor, it leads to an increased load. This, however, may contribute to improve consciousness about the insured person's health condition. Thus, an insurance company can readily secure an insurance object having a better health condition.

If both a level of first collaborating enthusiasm and a level of second collaborating enthusiasm are used in adjusting the premium, it means that the estimation of future health condition of an insured person is made with increased materials. Thereby, the premium adjustment can be worked out more reliably and easier, which leads to a further reduction of contractor's load. This eventually benefits an insurance company, because it can readily secure an object of insurance having a better health condition more easily.

So far in the present embodiment, description has been made on an exemplary case of adjusting within an insurance term the premium payable each month by an insurance contractor to insurance company, in the case of a renewal type term-insurance of life.

However, field of application of the present invention is not limited to the above-described type of insurance. It may be embodied also in the field of automobile insurance. Furthermore, it can be applied to the insurance against loss of various kinds of facility apparatus and home electric appliances; also to the maintenance guarantee of such kinds of devices.

The basic principle in the above-described life insurance does apply to those kinds of insurance against loss as well, except that there will be changes in the practical items caused by difference in the type of an insurance object.

For example, an insurance descriptions adjusting system for adjusting automobile insurance descriptions comprises an automobile measurement apparatus for measuring condition of a vehicle, and a center apparatus connected thereto via communication line.

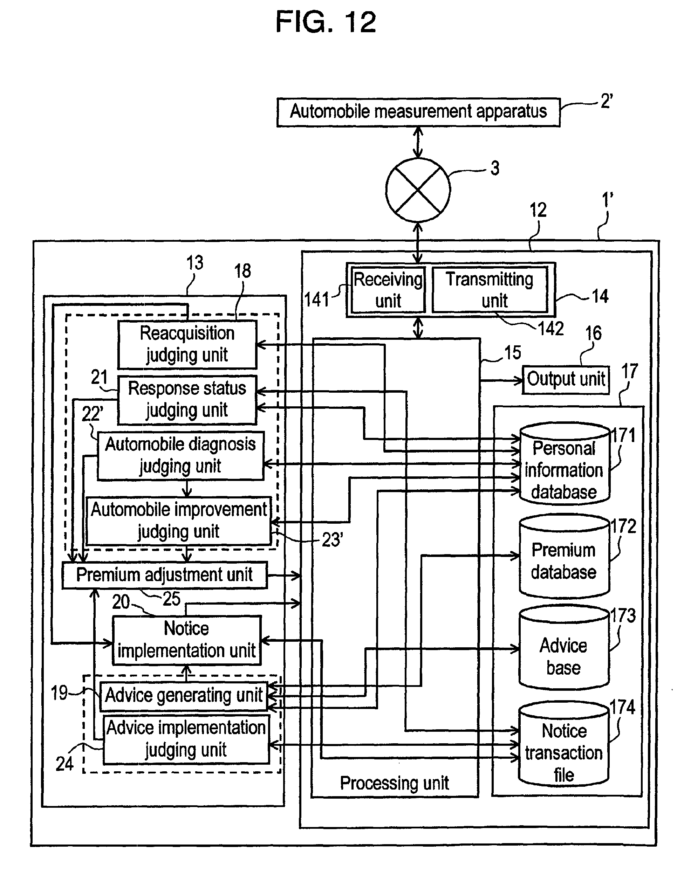

A center apparatus adapted for the automobile insurance has a structure as shown in FIG. 12. Where, the health condition judging unit 22 and the health improvement judging unit 23 of center apparatus 1 in accordance with the above-described embodiment is replaced, respectively, with an automobile diagnosis judging unit 22' for diagnosing maintenance condition (normal or abnormal) of a vehicle and an automobile improvement judging unit 23 for judging whether or not the maintenance condition has been improved.

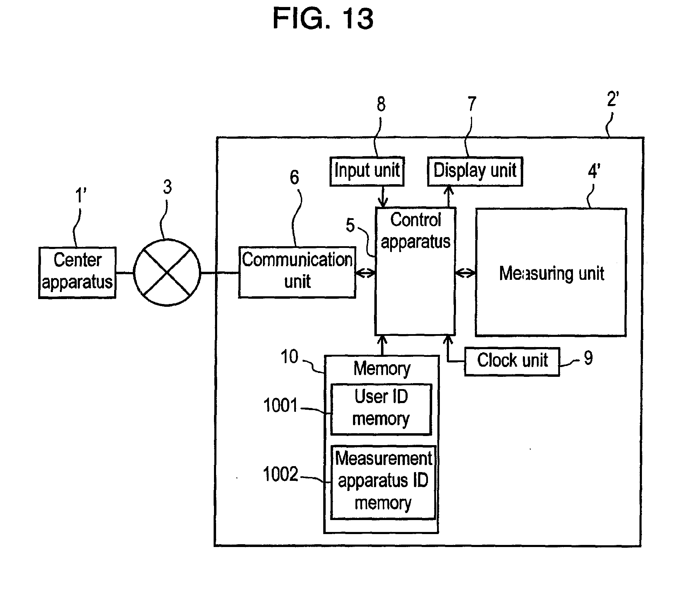

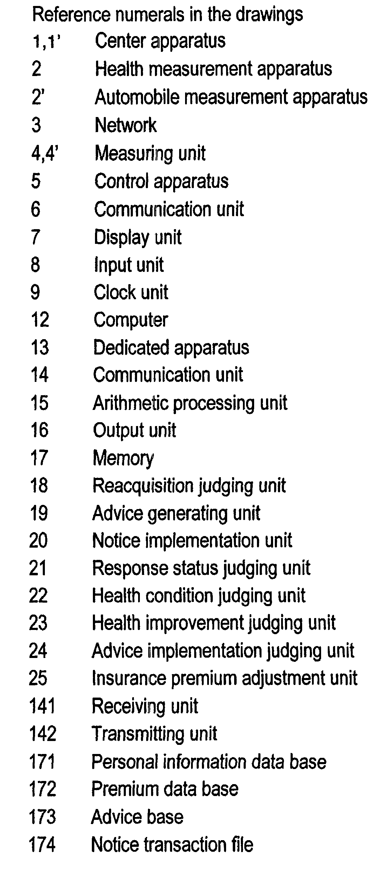

The automobile measurement apparatus is an apparatus having measuring unit for measuring status data such as maintenance condition of engine, maintenance condition of brake, condition of consumable articles and other items related to maintenance condition of a vehicle. The basic structure is as shown in FIG. 13; it remains the same as that of the health measurement apparatus 2 with an exception of measuring unit 4'. The automobile measurement apparatus 2' is installed at an automobile maintenance factory, home of an insurance contractor, etc., for use in regular checking.

Regular checking and other maintenance works performed by an insurance contractor are a reflection of the contractor's enthusiasm towards maintenance status data reacquisition. The day to day check of oil, pneumatic tire pressure, etc. made by an insurance contractor to an advice represent a level of collaborating enthusiasm at the contractor for keeping the cruising capability safety functions of a vehicle in good condition. When a certain term void of regular checking by a contractor continues for a certain predetermined term, or on a certain specific date prior to regular checking date, a notice urging a regular check (reacquisition notice) is implemented. Such items as contents of the reacquisition notice, whether it was responded or not, contents of the response, response timing, etc. remain the same as those in the case of life insurance. The contents of reacquisition notice, for example, include the number of notices implemented, mailing means, etc. If a reacquisition notice was not responded by a regular checking, reacquisition notice will have to be implemented repeatedly. Then the number of notices increases. The above-described items as maintenance condition of engine, maintenance condition of brake, and condition of consumable articles are among the reacquired status data. Measurement apparatus ID for identifying a measurement apparatus which measured the status data, measurer ID for identifying a person conducting the checking, the maintenance firm itself or a third party, etc. represent the reliability of status data. Condition of a vehicle and contents of advice may be determined in terms of mechanical engineering based on status data. Contents of advice is exhibited, like in the case of life insurance, in terms of a difficulty level of implementing, frequency of recommendation, size of prospective effects when advice is implemented, etc. Items as to whether or not an advice is responded or not, contents of the response, response timing, and reliability of the response, are handled in the same way as in the case of life insurance. Based on the above-described relationships, a level of first collaborating enthusiasm and a level of second collaborating enthusiasm are determined; and the insurance descriptions are adjusted by making use of at least either one of the above two elements.

The status of an object of insurance in the present invention refers to the health condition of an insured person, when used with respect to a life insurance; the maintenance condition of a vehicle, when used with respect to an automobile insurance. The insurance contractor in the present invention refers to e.g. an insured person, an insurance contractor, a beneficiary, etc. when used with respect to a life insurance; an insurance contractor, other co-passengers on board, etc. when used with respect to an automobile insurance.

Although in the above embodiments description is made on adjustment of premium, it is not limited to it. It can also be used for eventually adjusting the premium through adjustment of amount of death benefit or redemption at maturity, amount of annual pension, and term of insurance.

In the above embodiments, the adjustment of premium is worked out by using a formula; in which a basic premium is multiplied by a certain factor. However, the relevant relationships may be integrated into a premium adjustment table (insurance descriptions adjustment table) in which the contents of premium adjustment is described in advance, so that the insurance premium adjustment unit 25 (insurance descriptions adjusting means) adjusts the insurance descriptions in accordance with the premium adjustment table. The premium adjustment table and the formula used in the above-described embodiment define a relationship among a level of first collaborating enthusiasm, a level of second collaborating enthusiasm shown by an insurance contractor and the insurance descriptions. Therefore, it is advantageous in that it enables to adjust the insurance descriptions precisely in a simple procedure by only acquiring a level of first collaborating enthusiasm, a level of second collaborating enthusiasm shown by an insurance contractor.

Thus, a method of adjusting insurance descriptions, determined based on status data describing values representing the state of an insured object, by making use of an adjustment table based on at least one of a level of first collaborating enthusiasm shown by an insurance contractor towards the reacquisition of the status and a level of second collaborating enthusiasm shown by an insurance contractor in reducing the risk of an insured object falls within the scope of insurance descriptions adjustment method in accordance with the present invention.

An equivalent operation worked out by making use of an adjustment table may of course be performed instead by means of algorithm.

Furthermore, a multiplying factor does not need to be kept constant, it may be changed time-wise, as described below.

For example, in a case where an advice is not likely to generate immediate effects, a high multiplying factor may be given to for a certain period after the advice is reached and no significant effect is yet expected, on condition that the advice is being implemented conscientiously, even if condition data does not indicate much improvements.

Some time afterwards, when effects of the advice become recognizable, the high multiplying factor may be lowered albeit the advice is being conscientiously implemented. At this time, if condition of the insured object is recognized to is bettered or improved, a high multiplying factor may be given to for the fact.

Thus if the multiplying factor is applied in a flexible manner along with the lapse of time, it can work as a remedy for a kind of advice which does not reveal an immediate effect.

In the above-described embodiments, premium adjustment for a certain month is made by referring to a forerunning one-month term, which term ends at a date slightly ahead of starting date of the certain month. The forerunning term to be referred to, however, is not limited to the one-month term as specified in the above-described way. For example, the reference may be made to status data and a level of collaborating enthusiasm during a term starting on the first day of the insurance term until the date slightly ahead of stating date of the current month; or, even status data and a level of collaborating enthusiasm shown before the start of insurance term may be taken into consideration.

In the above-described embodiments, the notice implementation unit 20 implements a reacquisition notice based on judgement made by the reacquisition judging unit 18 of center apparatus 1, that a certain specific term continues without having a status data reacquired. The reacquisition notice may be implemented instead at a date that is ahead of the due data for status data reacquisition. Reacquisition of status data is essential in adjusting the premium. If all kinds of data are to be ready by a date that is slightly ahead of the starting date of current premium adjustment term for the insurance premium adjustment unit 25 to work out premium adjustment of the current term, the slightly-ahead date is due date for the status data reacquisition. In order to comply with the above time schedule, the reacquisition judging unit should comprise a system clock, for example, for watching the calendar in order to identify a certain specific date that comes before the above slightly-ahead date. A reacquisition judging unit which performs the above-described procedure corresponds to the reacquisition timing judging means of an insurance descriptions adjusting device in the present invention.

The means for judging a timing for implementing reacquisition notice and the means for implementing a reacquisition notice may be disposed instead in the health measurement apparatus 2 or the automobile measurement apparatus 2', not in the center apparatus 1, 1'. A health measurement apparatus 2 and an automobile measurement apparatus 2', which are capable of measuring health condition of an insured person or maintenance condition of a vehicle and sending the measurement results to center apparatus 1, 1', and further having those structures regarding the reacquisition correspond to the status data acquiring terminal device in the present invention.

When disposing the means for judging a timing for implementing reacquisition notice and the means for implementing a reacquisition notice in the health measurement apparatus 2 or the automobile measurement apparatus 2', the control apparatus 5, the clock unit 9, etc. of such apparatus may be utilized. For example, in the control apparatus 5; when it is in the premium adjustment mode and the measuring unit 4 starts measuring status data, time counting is started with the initial value set at 0. Time counting value is compared to a certain specific value which corresponds to the certain specific term; when the former value exceeds the latter value, it is judged that a term void of a status data reacquisition exceeds the certain specific term. Contents of reacquisition notice are read out of the memory 10, which are displayed on the display unit 7. After the reacquisition notice is confirmed on display unit 7, the condition data acquired through measuring unit 4 is sent via communication unit 6 to the center apparatus 1, 1'. The center apparatus 1, 1' adjusts the insurance descriptions by making use of the condition data delivered from the communication unit 6.

The above-described time-counting processing using the control apparatus 5 and the clock unit 9 corresponds to the reacquisition timing judging means of status data acquiring terminal device in the present invention.

The measuring unit 4 corresponds to the status data acquiring means of status data acquiring terminal device in the present invention. Procedure regarding outputting of reacquisition notice worked out by using the control apparatus 5, the display unit 7 and the memory 10 corresponds to the reacquisition notice implementing means of status data acquiring terminal device in the present invention. The communication unit 6 handling the operation corresponds to the status data transmitting means of status data acquiring terminal device in the present invention.

If a program of the control apparatus 5 is programmed so that a certain specific time count is compared to the date and time information from the clock unit 9 and a reacquisition notice is displayed on the display unit 7 when the certain specific time count coincides with the date and time information from the clock unit 9, whether now it is a certain date that is ahead of the due date for the status data reacquisition or not can be judged. In this case, the control apparatus 5 and the clock unit 9 correspond to the reacquisition timing judging means of status data acquiring terminal device in the present invention.

As described in the above, if the health measurement apparatus 2 or the automobile measurement apparatus 2' is provided with the means for judging a timing of implementing a reacquisition notice and the means for implementing a reacquisition notice, an insured person and an insurance contractor can receive a reacquisition notice even when the health measurement apparatus 2 or the automobile measurement apparatus 2' is not connected to the center apparatus 1, 1'.

In a case where the health measurement apparatus 2 or the automobile measurement apparatus 2' implements a reacquisition notice, the notice ID may be retained at the health measurement apparatus 2 or the automobile measurement apparatus 2', for a later transmission of information as to responded or not to the center apparatus 1, 1'.

It is not always necessary to use all of the condition data of an insured person measured during a relevant term for plural times. Only the data most favorable to the insurance contractor may be used, or the mean value of those data may be used, for example.

In the above embodiments, generation of advice and evaluation of a level of second collaborating enthusiasm using a state of response made to the advice are carried out by the center apparatus 1, 1'. However, such procedure may be performed instead by an advice unit which intervenes between an insurance descriptions adjusting device equivalent to the center apparatus 1, 1' and the terminal device such as health measurement apparatus 2, automobile measurement apparatus 2'.

The advice unit has a structure that is equivalent to the advice generating unit 19, the advice implementation judging unit 24.

When the advice unit is provided with a structure equivalent to the advice generating unit 19, the advice unit comprises, for example, the advice generating unit 19, the advice base 173, the notice implementation unit 20, etc.

On the other hand, the insurance descriptions adjusting device does not need to have the advice generating unit 19 and the advice base 173; only the advice implementation judging unit 24, the insurance premium adjustment unit 25, etc. may be provided.

Status data to be used by the advice generating unit 19 for generating advice is transmitted to the advice unit, after the insurance descriptions adjusting device receiving it from the health measurement apparatus 2 or the automobile measurement apparatus 2'. Upon receiving the status data, the advice unit makes reference to the advice base 173, and the advice generating unit 19 generates an advice. The advice thus generated is transmitted to the health measurement apparatus 2 or the automobile measurement apparatus 2' in accordance with instruction given by the notice implementation unit 20. When, information regarding the advice and notice ID attached by the notice implementation unit 20 are sent to the insurance descriptions adjusting device to be stored in the notice transaction file 174. Response data provided by using the health measurement apparatus 2 or automobile measurement apparatus 2' in reply to advice is transmitted to the insurance descriptions adjusting device. In the insurance descriptions adjusting device, the advice implementation judging unit 24 evaluates a level of second collaborating enthusiasm referring to notice ID, etc. stored in the notice transaction file 174, and the insurance premium adjustment unit 25 adjusts the premium.

Instead of transmitting the response data direct to the insurance descriptions adjusting device, the data may be transmitted to the insurance descriptions adjusting device via the advice unit.

When the advice unit is structured as a unit equivalent to the advice implementation judging unit 24, it should further comprise, for example, the notice transaction file 174, etc.

On the other hand, the insurance descriptions adjusting device does not need to have the advice implementation judging unit 24; only the advice generating unit 19, the notice implementation unit 20, advice base 173, the insurance premium adjustment unit 25, etc. may be provided.

Status data acquired by using the health measurement apparatus 2 or the automobile measurement apparatus 2' is transmitted to the insurance descriptions adjusting device. Upon receiving the status data, the insurance descriptions adjusting device generates at the advice generating unit 19 an advice based on the status data. The transmitting unit 142 transmits a notice containing the advice to the health measurement apparatus 2 or the automobile measurement apparatus 2' in accordance with instruction given by the notice implementation unit 20. Then, information regarding the advice and notice ID are sent from insurance descriptions adjusting device to the advice unit to be stored in the notice transaction file 174 of advice unit. Response data provided by using the health measurement apparatus 2 or the automobile measurement apparatus 2' in response to advice is transmitted to the advice unit. In the advice unit, the advice implementation judging unit 24 evaluates on a level of second collaborating enthusiasm in accordance with the delivered response data referring to information regarding the advice, etc. stored in the notice transaction file 174. The evaluation results are transmitted from the advice unit to the insurance descriptions adjusting device, and the insurance premium adjustment unit 25 adjusts the premium.

When the advice unit is structured as a unit equivalent to the advice generating unit 19 and advice implementation judging unit 24, it should further comprise, for example, the notice implementation unit 20, the advice base 173, the notice transaction file 174, etc.

On the other hand, the insurance descriptions adjusting device does not need to have the advice generating unit 19, the advice implementation judging unit 24 and the advice base 173; only the insurance premium adjustment unit 25, etc. may be provided.

Status data to be used by advice generating unit 19 for generating an advice is transmitted to the advice unit from the health measurement apparatus 2 or the automobile measurement apparatus 2'. Upon receiving the status data, the advice unit generates an advice based on the delivered status data referring to the advice base 173. The advice thus generated is notified to the health measurement apparatus 2 or the automobile measurement apparatus 2', etc. in accordance with instruction given by the notice implementation unit 20.

The status data received at the advice unit is transmitted to the insurance descriptions adjusting device, from the advice unit. Response data provided by using the health measurement apparatus 2 or the automobile measurement apparatus 2', etc. in response to advice is transmitted to the advice unit. In the advice unit, the advice implementation judging unit 24 evaluates a level of second collaborating enthusiasm based on the response data referring to the notice transaction file 174. The evaluation results are transmitted from the advice unit to the insurance descriptions adjusting unit, and the insurance premium adjustment unit 25 of insurance descriptions adjustment device adjusts the premium.

As described in the above, if an insurance agent uses the advice unit which generates advice and evaluates on a level of second collaborating enthusiasm, it can intermediate an insurance company and an insurance contractor from a fair and impartial stance without being influenced by managerial environment of insurance company. Thus an agent will be able to determine contents of advice, and provide a fair evaluation thereon.

The advice generated by advice generating unit 19 and notified by the notice implementation unit 20 is displayed in the health measurement apparatus 2 or the automobile measurement apparatus 2' at its display unit 7, in either of the cases where the advice generating unit 19 and the notice implementation unit 20 are disposed in the insurance descriptions adjusting device and where these units are disposed in the advice unit. Operation of the display unit 7 in this occasion, although the display unit 7 does not display advice alone, corresponds to the advice display means of the advice responding terminal device in the present invention.

Response data regarding response made in reply to the advice and displayed on the display unit 7 is transmitted to the insurance descriptions adjusting device and the advice unit. The communication unit 6 of health measurement apparatus 2 or automobile measurement apparatus 2' is used for communicating other data too. The control apparatus 5 is used also for other processing. Operation of providing a response data regarding response made in accordance with an advice and transmitting the data to the insurance descriptions adjusting device or the advice unit corresponds to the advice response transmitting means of the advice responding terminal device in the present invention.

The advice display unit and advice response transmitting unit of an advice responding terminal device is not necessarily integrated with health measurement apparatus 2 or the automobile measurement apparatus 2' (status data acquiring terminal device). The advice may be displayed at a place other than the place where the health measurement apparatus 2 or the automobile measurement apparatus 2' is installed, and a response to the advice may be inputted therefrom. An advice responding terminal device may be installed in, for example, a sports gym, which enables an insured person to make on-the-spot response while he or she is viewing an advice. This will offer a substantial convenience to an insured person, and the reacquisition may be expedited. Thus, an insured person can acquire condition data through a health measurement apparatus installed at home, and view an adjusted insurance descriptions; or, this will make it possible to acquire status data, implement an advice and confirm insurance descriptions at any scene of day-to-day life.

In the above embodiments, the center apparatus 1 is described split into a computer 12 and a dedicated apparatus 13. However, a center apparatus 1 can be formed solely with a computer, if functions of the dedicated apparatus 13 is written in the form of an insurance descriptions adjusting program so that processing unit of the computer 12 is controlled by the program. A CD-ROM or the like recording medium storing such an insurance descriptions adjusting program is an example of the computer-readable recording medium storing insurance descriptions adjusting program in the present invention.

Furthermore, the premium adjustment in the above embodiments are been worked out by taking into account the number of status data acquisitions and the timing when acquired, which data have been made available basically in response to reacquisition notice. However, there may be such a case where a level of enthusiasm towards the condition management for an insured object is so high that there is no need of implementing a reacquisition notice.

A level of first collaborating enthusiasm at an insurance contractor towards the reacquisition of status data, however, can be determined without having a reacquisition notice. If sufficient status data are made available without a reacquisition notice, it may be an indication that a contractor is already highly conscious about the importance of condition management for an insured object. Therefore, the level of first collaborating enthusiasm may be evaluated, without any regard to reacquisition notice, based on at least one of the number of status data acquisitions and the timing when acquired. If the number of status data acquisitions is high, status data is acquired recently, or the acquisition timing is optimum, then the first collaborating enthusiasm may be is high.

The above method of adjusting the insurance descriptions, in which method a reacquisition notice is not an indispensable item, is also an example of an insurance descriptions adjusting method in accordance with the present invention.

In the above-described embodiments, user ID is used for switching the health measurement apparatus 2 from one mode to another mode. However, in the present application, it is not limited to such an example.

For example, when it is used in the measurement mode and the measured values are managed user-wise,

EP 1 313 043 A1

user ID will have to be employed also for the purpose. That is, user ID is inputted in either of the modes. In such cases, a mode switching switch may be provided separately.

**INDUSTRIAL APPLICABILITY**

As described in the above, an insurance descriptions adjusting method in accordance with the present invention adjusts the insurance descriptions, which have been determined based on status data describing values representing the status of an insured object, by using at least one of a level of first collaborating enthusiasm shown by an insurance contractor towards the reacquisition of status data and a level of second enthusiasm shown by an insurance contractor in reducing the risk of an insured object. Therefore, it turns out possible to alleviate the load of contractor with respect to an insurance object whose future risk is likely to go down. As a result, an insurance company can readily secure an object of insurance having a low prospective future risk.

When the insurance descriptions are adjusted by making use of an adjustment table, or a formula, it can be finished precisely and easily by simply acquiring a level of first collaborating enthusiasm shown by an insurance contractor or a level of second collaborating enthusiasm.

When an information on a state how a reacquisition notice urging reacquisition of status data was responded is used, a level of first collaborating enthusiasm can be evaluated on in the form of an objective index. The use of information about the response made in replay to a reacquisition notice from an insurance company makes the evaluation stable ones.

If a reacquisition notice is implemented as soon as a certain term void of status data reacquisition continues for a certain predetermined specific term, it would improve consciousness of an insurance contractor about importance of regularly reacquiring status data which is changing from time to time. This also raises possibility of an insurance company acquiring status data on regular basis, which eventually enables to determine insurance descriptions more properly.

Still further, if a reacquisition notice is implemented at a certain date which is slightly ahead of the due date of the status data reacquisition, it would prevent occurrence of such a state where necessary status data is in short on the day of adjustment and the insurance descriptions are compelled to be adjusted towards increase in the load of a contractor.

Still further, if a level of first collaborating enthusiasm is evaluated by taking into account the contents of reacquisition notice, then the cost of reacquisition notice and consciousness level of an insurance contractor about importance of the status data reacquisition are reflected in the insurance descriptions. This leads to an alleviation of the load of insurance contractor on an insurance object whose future risks are likely to go down, and at the same time an insurance company can readily secure an insurance object whose future risks are likely to go lower.

Still further, if at least one of the number of status data acquisitions and the timing when acquired is used, a level of first collaborating enthusiasm can be evaluated in the form of an objective index, without any regards to implementation of a reacquisition notice. Especially, in a case where an insurance contractor has a high enthusiasm towards the status data reacquisition and many status data is reacquired, the high collaborating enthusiasm can be reflected in the insurance descriptions for a lower load of the insurance contractor.

Still further, if the reliability of status data is taken into account in adjusting the insurance descriptions, possible ill-effects to be caused by a status data of low reliability can be curtailed by, for example, making the adjustment margin smaller.

Still further, if a status data and a certain predetermined standard value are compared in adjusting the insurance descriptions, then it turns out possible to confirm whether the condition of an insurance object as exhibited by the status data is good or not. When an insured object is confirmed that it is in good condition, it means that the risks of insurance company are small; so, the contractor's load can be alleviated.

Still further, if the adjustment of insurance descriptions is worked out based on a time-sequential change of status data, it turns out possible to positively reflect whether or not the condition of an insured object is improving in the insurance descriptions; thereby, encouraging improvement in the condition of an insured object. The risks of an insurance company will decrease, and the load of a contractor may be alleviated.

Still further, if an information regarding a state of response made in reply to an advice urging reduction of risks of an insured object is used, a level of second collaborating enthusiasm can be evaluated on in the form of an objective index. By so doing, insurance descriptions may be properly adjusted with an insured object whose future risks are likely to go down, even if the advice is not a sort which reveals effects immediately.

Still further, if contents of the advice is taken into account in evaluating a level of second collaborating enthusiasm, then a possible emergence of a sense of unfairness regarding the adjustment, which stems from a wide variety in the contents of advice, can be suppressed. Thus, the insurance descriptions can be adjusted more appropriately.

Still further, if the reliability of response made in reply to an advice is taken into account in adjusting the insurance descriptions, then an insurance company can grasp a relationship between the effects of advice and the implemented contents of the advice. Thus, the insurance descriptions can be adjusted more appropriately. Even though advice of the same contents are given to, the implemented contents are not necessarily the same. In a case where the reliability of response, possible ill-effects to be caused by a low reliability response can be curtailed by, for example, making the adjustment margin smaller.

Still further, if the reliability of a response made in reply to an advice is judged based on an information about a state of acknowledgement given to a contractor implementing the advice, then the reliability of a response made in reply to an advice may be evaluated in the form of an objective index.

An insurance descriptions adjusting device in accordance with the present invention adjusts insurance descriptions determined based on values acquired as status data representing a condition of an insured object. Then, the collaborating enthusiasm evaluation means evaluates at least one of a level of first collaborating enthusiasm shown by an insurance contractor towards the status data reacquisition and a level of second enthusiasm shown by an insurance contractor in reducing the risks of an insured object. Insurance descriptions are adjusted by the insurance descriptions adjustment means using result of evaluation made by the collaborating enthusiasm evaluation means. Therefore, load of a contractor can be lowered with an insurance object whose future risks are likely to go down. As a result, an insurance company can readily secure an object of insurance whose prospective future risks are low.

Furthermore, if the collaborating enthusiasm evaluation means uses an information about a state of response made in reply to a reacquisition notice urging reacquisition of status data, the first collaborating enthusiasm can be evaluated on in the form of an objective index.

Still further, it further comprises reacquisition term judging means for judging whether or not a certain term void of status data reacquisition continues for a certain predetermined specific term. As soon as the reacquisition term judging means judges that the certain term void of status data reacquisition continues for the predetermined specific term, a reacquisition notice is implemented. This will contribute to improve consciousness of an insurance contractor about the importance of regularly acquiring condition data, which changes from time to time. At the same time, an insurance company will have a higher possibility of acquiring condition data on regular basis. Thus, the insurance company will be in a position of determining the insurance descriptions more properly.

Still further, it further comprises reacquisition timing judging means for judging whether it is certain specific date that is somewhat ahead of the due date for the status data reacquisition. As soon as the reacquisition timing judging means judges that it is the certain specific date, a reacquisition notice is implemented. Thus it will avoid occurrence of such a state where all the necessary status data are not ready at the time when the insurance descriptions adjustment is worked out, and as a result, the insurance descriptions are compelled to be adjusted towards an increased load of the contractor.

Still further, the collaborating enthusiasm evaluating means evaluate on the first collaborating enthusiasm using at least one of, for example, the number of status data acquisitions and timing of the acquisition. When, a level of first collaborating enthusiasm can be evaluated on in the form of an objective index, regardless of whether there was a reacquisition notice or not. Especially, in a case where an insurance contractor has a high enthusiasm towards the status data reacquisition and there are many status data already made available, load of the contractor may be alleviated by reflecting the collaborating enthusiasm in the insurance descriptions.

Still further, it further comprises status data reliability judging means for judging the reliability of status data, and the insurance descriptions adjusting means adjusts the insurance descriptions taking into account the reliability of status data as judged by the status data reliability judging means. By so doing, possible ill-effects to be caused by a low-reliability status data can be suppressed by, or example, making the adjustment margin smaller.

Still further, the insurance descriptions adjusting means adjusts the insurance descriptions in accordance with result of comparison of status data with a certain predetermined standard value. Thus it turns out to be possible to confirm whether an insured person is in good health condition, or a vehicle is in a well-maintained condition. If an insured object is confirmed to be in good condition, it means that the risks of insurance company are small. Then, contractor's load may be alleviated.

Still further, the insurance descriptions adjusting means adjusts the insurance descriptions in accordance with a time-sequential change of status data. Thus it makes it possible to confirm whether condition of an insured object is improving or not. Insurance contractor will be encouraged to exert more efforts for improving the health condition or maintenance condition of a vehicle when the state of conditions is positively reflected in the insurance descriptions. Thereby, an insurance company can lower the risks, and the load of contractor may be alleviated.

Still further, if the collaborating enthusiasm evaluation means uses an information about a state of response made in reply to an advice for reducing the risks of an insurance object, the second collaborating enthusiasm can be evaluated on in the form of an objective index. By so doing, the insurance descriptions can be properly adjusted with an insured object whose future risks are likely to go down, even in a case where the advice is not of a sort which reveals the effects immediately.

Still further, it further comprises advice response reliability judging means for judging the reliability of response made in reply to an advice. The insurance descriptions adjusting means adjusts the insurance descriptions based on the reliability of response as judged by the advice response reliability judging means. This makes it possible for an insurance company to grasp a relationship between the effects of advice and the implemented contents of the advice, and the insurance company will be in a position of adjusting the insurance descriptions more properly. Even though advice of the same contents are given to, the contents implemented in response to the advice are not necessarily the same. In a case where the reliability of a response is low, possible ill-effects to be caused by the low reliability response can be suppressed by, for example, making the margin of adjustment smaller.

Still further, a status data acquiring terminal device in the present invention is provided with reacquisition notice implementing means for urging the status data reacquisition. As the result, it turns out to be unnecessary to secure a communication means with the insurance descriptions adjusting device for receiving a reacquisition notice therefrom. Thus the present invention offers a status data acquiring terminal device that is suitable for constituting an insurance descriptions adjusting system integrated with the insurance descriptions adjusting device.

Still further, the reacquisition term judging means for judging whether or not a term void of status data reacquisition continues for a certain predetermined specific term, is disposed in the status data acquiring terminal device. As soon as the reacquisition term judging means judged that a certain term void of status data reacquisition continues for the certain predetermined specific term, the reacquisition notice implementing means implements a reacquisition notice. This would contribute to improve consciousness of an insurance contractor towards a regular acquisition of status data which is changing from time to time. At the same time, it will increase a possibility for an insurance company to acquire status data on regular basis, and enable to determine the insurance descriptions more properly.

Still further, the reacquisition timing judging means for judging whether it is certain specific date ahead of the due date for status data reacquisition is disposed in the status data acquiring terminal device. As soon as the reacquisition timing judging means judges that it is the specific date, the reacquisition notice implementing means implements a reacquisition notice. Thus it can avoid occurrence of such a state where all the necessary status data are not available at the time of needs and the insurance descriptions are compelled to be adjusted towards an increased load of the contractor.

Still further, an advice responding terminal device in the present invention can display an advice delivered from insurance descriptions adjusting device aiming to reduce the risks of an insured object, and transmit a state of response made in reply to the advice. Thus the present invention offers an advice responding terminal device that is suitable to constituting an insurance descriptions adjusting system integrated with an insurance descriptions adjusting device which properly adjusts the insurance descriptions using an information about a state of response made in reply to an advice with respect to an object of insurance whose future risks are likely to go down.

Still further, an advice device in the present invention makes it possible for an insurance agent, etc. to work out as a third party an advice and evaluate on a level of second collaborating enthusiasm in intermediating an insurance company and an insurance contractor. Thus the contents of advice and the evaluation can be maintained fair, without being influenced by the managerial environments of an insurance company.

A computer-readable recording medium in the present invention stores an insurance descriptions adjusting program for allowing the procedure of the above-described insurance descriptions adjusting method to be executed by a computer. Thus it offers an insurance descriptions adjustment program which recites the same effects as the above-described insurance descriptions adjusting method.

A program in the present invention is an insurance descriptions adjustment program for allowing the procedure of the above-described insurance descriptions adjusting method to be executed by a computer. Thus it can offer the same effects as the above-described insurance descriptions adjusting method.

A program in the present invention is a status data acquiring program for having a computer operate as means for the above-described status data acquiring terminal device. Thus it can offer the same effects as the above-described status data acquiring terminal device.

A program in the present invention is an advice responding program for having a computer operate as means for the above-described advice responding terminal device. Thus it can offer the same effects as the above-described advice responding terminal device.

A program in the present invention is an advice program for having a computer operate as means for the above-described advice device. Thus it can offer the same effects as the above-described advice device.

## Claims

1. An insurance descriptions adjusting method for adjusting insurance descriptions determined based on status data acquired as a value representing a state of an insured object, said method comprising the step;

   adjusting said descriptions by using at least one of

   a level of first collaborating enthusiasm shown by an insurance contractor towards reacquisition of said status data, and

a level of second collaborating enthusiasm shown by the insurance contractor in reducing risks of said insured object.

2. The insurance descriptions adjusting method of claim 1, wherein said adjustment of insurance descriptions is made based on one of a predetermined adjustment table and a formula.

3. The insurance descriptions adjusting method of claim 1 or 2, wherein said first collaborating enthusiasm is evaluated based on a state of response made in reply to a reacquisition notice urging the reacquisition of said status data.

4. The insurance descriptions adjusting method of claim 3, wherein said reacquisition notice is implemented, in case that a term void of the reacquisition of said status data continues for a certain specific term.

5. The insurance descriptions adjusting method of claim 3, wherein said reacquisition notice is implemented at a certain specific date ahead of due date for the reacquisition of said status data.

6. The insurance descriptions adjusting method of claim 3, wherein a level of said first collaborating enthusiasm is evaluated on by taking into account contents of said reacquisition notice.

7. The insurance descriptions adjusting method of claim 3, wherein said state of response contains at least one of whether said reacquisition notice is responded or not, contents of the response and timing of the response.

8. The insurance descriptions adjusting method of claim 1 or 2, wherein said first collaborating enthusiasm is evaluated on by using at least one of a number of said status data acquisitions and timing when said status data is acquired.

9. The insurance descriptions adjusting method of claim 1 or 2, wherein said insurance descriptions are adjusted taking into account reliability of said status data.

10. The insurance descriptions adjusting method of claim 9, wherein the reliability of said status data is judged based on a state of said status data acquisition.

11. The insurance descriptions adjusting method of claim 1 or 2, wherein said insurance descriptions are adjusted in accordance with result of comparison worked out between said status data and a predetermined standard value.

12. The insurance descriptions adjusting method of claim 1 or 2, wherein said insurance descriptions are adjusted in accordance with time-sequential change in said status data.

13. The insurance descriptions adjusting method of claim 1 or 2, wherein said second collaborating enthusiasm is evaluated by using a state of response made in reply to an advice made for the purpose of reducing risks of said insured object.

14. The insurance descriptions adjusting method of claim 13, wherein said second collaborating enthusiasm is evaluated by taking into account the contents of the advice.

15. The insurance descriptions adjusting method of claim 13, wherein the state of response contains at least one of whether said reacquisition notice is responded or not, contents of the response and timing of the response.

16. The insurance descriptions adjusting method of claim 13, wherein said insurance descriptions are adjusted taking into account reliability of the response made in reply to said advice.

17. The insurance descriptions adjusting method of claim 16, wherein the reliability of the response made in reply to said advice is evaluated based on a state how acknowledgement is given to the insurance contractor implementing said advice.

18. An insurance descriptions adjusting device for adjusting descriptions of an insurance determined based on a status data acquired as a value representing a state of an insured object, said device comprising:

collaborating enthusiasm evaluating means for evaluating at least one of a level of first collaborating enthusiasm shown by an insurance contractor towards reacquisition of said status data and a level of second collaborating enthusiasm shown by an insurance contractor in reducing risks of said insured object; and

insurance descriptions adjusting means for adjusting said insurance descriptions by making use of result of evaluation worked out by said collaborating enthusiasm evaluating means.

19. The insurance descriptions adjusting device of claim 18, wherein said collaborating enthusiasm evaluating means evaluates said first collaborating enthusiasm by using a state of response made in reply to a reacquisition notice urging the reacquisition of said status data.

20. The insurance descriptions adjusting device of claim 19, further comprising reacquisition term judging means for judging whether a term void of reacquiring said status data continues for a certain specific term or not, wherein
in case that said reacquisition term judging means judges that the term void of reacquiring said status data continues for the certain specific term, said reacquisition notice is implemented.

21. The insurance descriptions adjusting device of claim 19, further comprising reacquisition timing judging means for judging whether it is certain specific date which comes ahead of due date for reacquisition of said status data, wherein
in case that said reacquisition timing judging means judges that it is the certain specific date, said reacquisition notice is implemented.

22. The insurance descriptions adjusting device of claim 19, wherein said information about state of response contains at least one of whether said reacquisition notice is responded or not, contents of the response and timing of the response.

23. The insurance descriptions adjusting device of claim 18, wherein said collaborating enthusiasm evaluating means evaluates said first collaborating enthusiasm using at least one of a number of said status data acquisitions and timing when said status data is acquired.

24. The insurance descriptions adjusting device of claim 18, further comprising status data reliability judging means for judging the reliability of said status data, wherein
said insurance descriptions adjusting means adjusts said insurance descriptions taking into account reliability of said status data judged by said status data reliability judging means.

25. The insurance descriptions adjusting device of claim 18, wherein said insurance descriptions adjusting means adjusts said insurance descriptions in accordance with result of comparison worked out between said status data and a predetermined standard value.

26. The insurance descriptions adjusting device of claim 18, wherein said insurance descriptions adjusting means adjusts said insurance descriptions in accordance with time-sequential change in said status data.

27. The insurance descriptions adjusting device of claim 18, wherein said collaborating enthusiasm evaluating means evaluates said second collaborating enthusiasm by using a state of response made in reply to an advice implemented for reducing risks of said insured object.

28. The insurance descriptions adjusting device of claim 27, wherein the state of response contains at least one of whether said advice was responded or not, content of the response and timing of the response.

29. The insurance descriptions adjusting device of claim 27, further comprising advice response reliability judging means for judging the reliability of the response made in reply to said advice, wherein
said insurance descriptions adjusting means adjusts said insurance descriptions in accordance with reliability of the response made in reply to said advice judged by said advice response reliability judging means.

30. A status data acquiring terminal device that can communicate with the insurance descriptions adjusting device of claim 19 comprising:

status data acquiring means for acquiring said status data,
status data transmitting means for transmitting said status data, and

reacquisition notice implementing means for implementing said reacquisition notice requesting said status data.

**31.** The status data acquiring terminal device of claim 30, further comprising reacquisition term judging means for judging whether a term void of reacquiring said status data continues for a certain predetermined specific term or not, wherein

in case that said reacquisition term judging means judges that the term void of reacquiring said status data continues for the certain predetermined specific term, said reacquisition notice implementing means implements said reacquisition notice.

**32.** The status data acquiring terminal device of claim 30, further comprising reacquisition timing judging means for judging whether it is the certain specific date which comes ahead of due date for reacquisition of said status data, wherein

in case that said reacquisition timing judging means judges that it is said certain specific date, said reacquisition notice implementing means implements said reacquisition notice.

**33.** An advice responding terminal device that can communicate with the insurance descriptions adjusting device of claim 27, comprising:

advice display means for displaying said advice, and
advice response transmitting means for transmitting a state of response made in reply to said advice displayed on said advice display means to said insurance descriptions adjusting device.

**34.** An advice device for coupling an insurance descriptions adjusting device and an advice responding terminal device, wherein

said adjusting device for adjusting an insurance descriptions determined based on a status data acquired as a value representing a state of an insured object, comprises:

collaborating enthusiasm evaluating means for evaluating at
least one of a level of first collaborating enthusiasm shown by an insurance contractor towards reacquisition of said status data and a level of second collaborating enthusiasm shown by an insurance contractor in reducing risks of said insured , and
insurance descriptions adjusting means for adjusting said insurance descriptions by using result of evaluation made by said collaborating enthusiasm evaluating means, wherein
said collaborating enthusiasm evaluating means evaluates said second collaborating enthusiasm using a state of response made in reply to an advice for reducing risks of said insured object, and

said advice responding terminal device that can communicate with said insurance descriptions adjusting device, comprises:

advice display means for displaying said advice, and
advice response transmitting means for transmitting a state of response made in reply to said advice displayed on said advice display means to said insurance descriptions adjusting device, and
wherein

said advice device works out at least one of generation of said advice and evaluation of said second collaborating enthusiasm as proxy.

**35.** An insurance descriptions adjusting program for allowing a computer to execute a procedure of said insurance descriptions adjusting method recited in one of claims 1 through 17.

**36.** A status data acquisition program for allowing a computer to operate as means for said status data acquiring terminal device recited in one of the claims 30 through 32.

**37.** An advice response program for allowing a computer to operate as means for said advice responding terminal device recited in claim 33.

**38.** An advice program for allowing a computer to operate as means for said advice device recited in claim 34.

**39.** A computer-readable recording medium storing the program recited in one of claims 35 through 38.

# FIG. 1

# FIG. 2

# FIG. 3

EP 1 313 043 A1

# FIG. 4

# FIG. 5

# FIG. 6

Start

S101 — Input into input means? —N→ Measuring mode? ~S102

Y↓

S103 — User ID not coincide? —N→

Y↓

Switch to premium adjustment mode ~S104

S105 — Health measurement? Implement advice?

Health measurement ↙      ↘ Implement advice

Measure health condition ~S106

Acquire time of measurement ~S107

Acquire measurement apparatus ID ~S108

S109 — Notice ID exist? —N→

Y↓

N→ S110 — Input notice ID?

Y↓

Generate transmission data ~S111

Transmit transmission data ~S112

End

S113 — Input notice ID? ←N

Y↓

Input advice implementation contents ~S114

Acquire input day/time ~S115

Input Acknowledging person ID ~S116

Generate transmission data ~S117

Transmit transmission data ~S118

End

# FIG. 7

# FIG. 8

| | | Insurance descriptions adjustment | | |
| | | Lighter load | ← → | Heavier load |
|---|---|---|---|---|
| Imple-menting advice | Notice or not, Contents of advice, Contents and timing of response to notice | Advice of large effects implemented. | Advises of small effects implemented. | No implementation |
| | Scale factor for multiplying basic premium | 0.8 | 1.0 | 1.2 |
| | Notice or not, Contents of advice, Contents and timing of response to notice | Implemented difficult advice. Implemented regularly. Implemented many. | Implemented easy advice to implement. Implemented less times. | No implementation |
| | Scale factor for multiplying basic premium | 0.8 | 1.0 | 1.2 |
| | Implementation reliability ; acknowledging person, acknowledged contents and acknowledged apparatus. | Acknowledged by public facilities or expert. Dedicated measurement apparatus was used. | Acknowledged in person or family. General-use apparatus was used, e.g. pedometer. | |
| | Scale factor for multiplying basic premium | 0.9 | 1.0 | |

EP 1 313 043 A1

Degree of
poor health

Improved

Improved

BMI value

Abnormal | Normal compared
to standard value | Abnormal

# FIG. 10

| | | Insurance descriptions adjustment | | |
| --- | --- | --- | --- | --- |
| | | Lighter load | ← ·····→ | Heavier load |
| Re-acquisition | Contents of reacquisition notice. | No notice | Notice with modest expression. Or less number of notices. | Notice with strict expression. Or large number of notices. |
| | Scale factor for multiplying basic premium | 0.9 | 1.0 | 1.1 |
| | If responses are made to notice for reacquisition? | Responded just after notice. | Responded slightly later. | No response. |
| | Scale factor for multiplying basic premium | 0.9 | 1.0 | 1.3 |
| | Number of status data acquisitions and the timing. | Many times regularly. | Average | Less, or many in caprice. |
| | Scale factor for multiplying basic premium | 0.95 | 1.0 | 1.05 |
| | Information on reliability of data; Person who made data available, method, apparatus, time zone. | Medical organization or the experts. High accuracy medical instrument. Relaxed state e.g. early in the morning. | Insured person or a family member. Home-use equipment. Acquired just after exercise, etc. | |
| | Scale factor for multiplying basic premium | 0.9 | 1.0 | |

EP 1 313 043 A1

# FIG. 11

| Condition data | | Insurance descriptions adjustment | | |
|---|---|---|---|---|
| | | Lighter load ◄·····► | | Heavier load |
| | Normal or abnormal comparing to a standard value? | Normal | | Abnormal |
| | Scale factor for multiplying for basic premium | 0.8 | | 1.2 |
| | Time-sequentially improved or not? | Improved | No change | Degraded |
| | Scale factor for multiplying for basic premium | 0.8 | 1.0 | 1.2 |

EP 1 313 043 A1

# FIG. 12

# FIG. 13

Reference numerals in the drawings

| | |
|---|---|
| 1,1' | Center apparatus |
| 2 | Health measurement apparatus |
| 2' | Automobile measurement apparatus |
| 3 | Network |
| 4,4' | Measuring unit |
| 5 | Control apparatus |
| 6 | Communication unit |
| 7 | Display unit |
| 8 | Input unit |
| 9 | Clock unit |
| 12 | Computer |
| 13 | Dedicated apparatus |
| 14 | Communication unit |
| 15 | Arithmetic processing unit |
| 16 | Output unit |
| 17 | Memory |
| 18 | Reacquisition judging unit |
| 19 | Advice generating unit |
| 20 | Notice implementation unit |
| 21 | Response status judging unit |
| 22 | Health condition judging unit |
| 23 | Health improvement judging unit |
| 24 | Advice implementation judging unit |
| 25 | Insurance premium adjustment unit |
| 141 | Receiving unit |
| 142 | Transmitting unit |
| 171 | Personal information data base |
| 172 | Premium data base |
| 173 | Advice base |
| 174 | Notice transaction file |

## INTERNATIONAL SEARCH REPORT

| International application No. |
| --- |
| PCT/JP01/05085 |

**A. CLASSIFICATION OF SUBJECT MATTER**
  Int.Cl$^7$  G06F17/60

According to International Patent Classification (IPC) or to both national classification and IPC

**B. FIELDS SEARCHED**

Minimum documentation searched (classification system followed by classification symbols)
  Int.Cl$^7$  G06F17/60

Documentation searched other than minimum documentation to the extent that such documents are included in the fields searched
  Jitsuyo Shinan Koho         1922-1996    Toroku Jitsuyo Shinan Koho  1994-2001
  Kokai Jitsuyo Shinan Koho  1971-2001    Jitsuyo Shinan Toroku Koho  1996-2001

Electronic data base consulted during the international search (name of data base and, where practicable, search terms used)
  JOIS (JICST)

**C. DOCUMENTS CONSIDERED TO BE RELEVANT**

| Category* | Citation of document, with indication, where appropriate, of the relevant passages | Relevant to claim No. |
| --- | --- | --- |
| X | US 5797134 A (Progressive Casualty Insurance Company), 18 August, 1998 (18.08.98), Full text; Figs. 1 to 26 & EP 877992 A    & WO 9727561 A1 & JP 11-511581 A | 1-39 |
| X | JP 4-182868 A (Omron Corporation), 30 June, 1992 (30.06.92), Full text; Figs. 1 to 11   (Family: none) | 1-39 |
| A | US 5638273 A (Remote Control Systems, Inc.), 10 June, 1997 (10.06.97), Full text; Figs. 1 to 5   (Family: none) | 1-39 |
| A | JP 10-295651 A (NTT Data Corporation), 10 November, 1998 (10.11.98), Full text; Figs. 1 to 9   (Family: none) | 1-39 |

☐  Further documents are listed in the continuation of Box C.    ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 September, 2001 (07.09.01) | 18 September, 2001 (18.09.01) |

| Name and mailing address of the ISA/ | Authorized officer |
| --- | --- |
|   Japanese Patent Office | |
| Facsimile No. | Telephone No. |

Form PCT/ISA/210 (second sheet) (July 1992)